# FASCICULE DE BREVET EUROPEEN

(11) **EP 4 074 452 B1**
(45) Date de publication et mention de la délivrance du brevet: **15.11.2023**
(21) Numéro de dépôt: 22166634.0
(22) Date de dépôt: 05.04.2022
(51) Int. Cl.: B23K 20/12

(54) **TÊTE DE SOUDAGE PAR FRICTION MALAXAGE ET PROCÉDÉ UTILISANT UNE TELLE TÊTE DE SOUDAGE**
SCHWEISSKOPF FÜR RÜHRREIBSCHWEISSVERFAHREN UND VERFAHREN UNTER VERWENDUNG EINES SOLCHEN SCHWEISSKOPFES
HEAD FOR FRICTION STIR WELDING AND METHOD USING SUCH WELDING HEAD

(30) Priorité: 16.04.2021 FR 2103957
(43) Date de publication de la demande: 19.10.2022
(73) Titulaire: STIRWELD, 35760 Saint-Grégoire (FR)
(72) Inventeur: PIERRON, Thomas, 59000 Lille (FR); SEVESTRE, Gilles, 44100 Nantes (FR); DUBOURG, Laurent, 35760 Saint Gregoire (FR)
(74) Mandataire: Regimbeau

(56) Documents cités:
- JP-A- 2005 211 971
- JP-A- 2007 216 286
- US-A1- 2007 040 007

## Description

L'invention concerne une tête de soudage par friction malaxage, ainsi qu'un procédé de soudage par friction malaxage.

Un domaine d'application de l'invention concerne les machines-outils, par exemple à commande numérique.

En particulier, l'invention vise à pouvoir réaliser un soudage par friction malaxage à l'aide d'une machine-outil disposant d'une broche tournante mise en rotation par un moteur de la machine.

Le document JP2007216286A décrit un dispositif selon le préambule de la revendication 1.

Le document US2007/0040007A1 décrit aussi un dispositif selon le préambule de la revendication 1.

Le soudage par friction malaxage fait intervenir un outil de soudage spécifique, comportant un pion central saillant par rapport à un épaulement périphérique. On fait tourner cet outil de soudage pour le faire pénétrer dans les deux pièces mécaniques à souder et on le déplace tout en le faisant tourner le long d'une ligne de joint de ces deux pièces selon une trajectoire prescrite pour réaliser une ligne de soudure entre les deux pièces.

La soudure par friction malaxage classique laisse un trou dans les pièces mécaniques en fin de soudure après la sortie de l'outil de soudage. Ce trou peut poser problème dans certains champs d'application, notamment l'aéronautique et le spatial.

La fonction de rebouchage du trou en sortie de soudure grâce à un pion rétractable existe pour des robots de soudage par friction malaxage.

En revanche, la fonction de rebouchage du trou en sortie de soudure grâce à un pion rétractable n'existe pas pour des têtes de soudage par friction malaxage universelles, devant être montées sur des machines-outils à commande numériques et des machines ou centres d'usinage.

En effet, le pion rétractable sur les robots de soudage par friction malaxage est spécifique à ces robots et est difficilement adaptable à de telles têtes de soudage par friction malaxage universelles.

Un objectif de l'invention est d'obtenir une tête de soudage par friction malaxage (et un procédé de soudage par friction malaxage), qui soit munie d'un pion rétractable et qui soit compacte et universelle pour pouvoir être montée directement sur des machines-outils à commande numériques et des machines ou centres d'usinage compacte ayant simplement une broche d'entraînement en rotation de l'outil de soudage, pour pouvoir reboucher le trou en sortie de soudure entre les deux pièces mécaniques à souder, pour pallier les inconvénients mentionnés ci-dessus.

A cet effet, un premier objet de l'invention est une tête de soudage par friction malaxage telle que définie dans la revendication 1, cette tête étant destinée à être fixée sur une machine pour réaliser un soudage par friction malaxage à l'aide d'un outil comportant un épaulement périphérique et un pion central, qui est entouré par l'épaulement périphérique autour d'un premier axe de rotation et qui est apte à faire saillie par rapport à l'épaulement périphérique,
la tête comportant un bâti, destiné à être fixé à un châssis de la machine, et tête comporte un arbre central rotatif auquel est destiné à être fixé le pion central, une pièce de fixation d'épaulement, qui est située autour de l'arbre central et à laquelle est destiné à être fixé l'épaulement périphérique,
la tête comporte en outre un arbre primaire rotatif d'entraînement en rotation à la fois de la pièce de fixation d'épaulement et de l'arbre central rotatif autour du premier axe de rotation,
l'arbre central rotatif et la pièce de fixation d'épaulement ayant un dispositif d'accouplement l'un à l'autre, pour que l'arbre central rotatif soit solidaire en rotation de la pièce de fixation d'épaulement autour du premier axe de rotation et pour que l'arbre central rotatif soit libre en translation par rapport à la pièce de fixation d'épaulement le long du premier axe de rotation,
la tête comportant une pièce d'interface extérieure destinée à être fixée à une broche rotative de la machine et un premier dispositif de transmission de rotation de la pièce d'interface extérieure à l'arbre primaire rotatif autour du premier axe de rotation , la pièce d'interface extérieure dépassant d'une surface supérieure du bâti,
la tête comportant un moteur et un deuxième dispositif d'entraînement en translation de l'arbre central rotatif le long du premier axe de rotation à partir du moteur pendant la rotation de l'arbre central rotatif et de la pièce de fixation d'épaulement autour du premier axe de rotation, entre au moins une position basse de l'arbre central rotatif, dans laquelle le pion central fait saillie par rapport à l'épaulement périphérique suivant le premier axe de rotation et une position haute de l'arbre central rotatif, dans laquelle le pion central ne fait pas saillie par rapport à l'épaulement périphérique suivant le premier axe de rotation.

Suivant un mode de réalisation de l'invention, le premier axe de rotation, l'arbre central rotatif et l'arbre primaire rotatif sont déportés et parallèle par rapport à un deuxième axe de rotation de la pièce d'interface extérieure.

Suivant un mode de réalisation de l'invention, le premier dispositif de transmission de rotation comporte un arbre secondaire solidaire en rotation de la pièce d'interface extérieure autour du deuxième axe de rotation, une première poulie fixée autour de l'arbre secondaire, une deuxième poulie fixée autour de l'arbre primaire rotatif et une courroie de transmission de rotation entre la première poulie et la deuxième poulie pour transmettre la rotation de la pièce d'interface extérieure autour du deuxième axe de rotation à l'arbre primaire rotatif autour du premier axe de rotation.

Suivant un mode de réalisation de l'invention, le moteur comporte un arbre tertiaire rotatif autour d'un troisième axe de rotation, le deuxième dispositif d'entraînement en translation comporte un arbre intermédiaire coaxial et déporté par rapport à l'arbre central, un mécanisme de transmission de rotation de l'arbre tertiaire rotatif autour du troisième axe de rotation à l'arbre intermédiaire autour du premier axe de rotation et un mécanisme de transformation de rotation de l'arbre intermédiaire autour du premier axe de rotation en translation de l'arbre central le long du premier axe de rotation.

Suivant un mode de réalisation de l'invention, l'arbre tertiaire du moteur est rotatif autour du troisième axe de rotation déporté et transverse par rapport au premier axe de rotation, le mécanisme de transmission de rotation comporte un mécanisme de renvoi d'angle de l'arbre tertiaire rotatif autour du troisième axe de rotation à l'arbre intermédiaire autour du premier axe de rotation.

Suivant un mode de réalisation de l'invention, le mécanisme de renvoi d'angle de l'arbre tertiaire rotatif comporte au moins une première vis sans fin solidaire en rotation de l'arbre tertiaire et au moins une deuxième roue dentée solidaire en rotation autour de l'arbre intermédiaire, la deuxième vis sans fin engrenant avec la première roue dentée.

Suivant un mode de réalisation de l'invention, le mécanisme de transformation de rotation comporte un premier organe fileté, qui est fixé à ou formé par l'arbre intermédiaire, un deuxième organe taraudé, qui est solidaire en translation de l'arbre central le long du premier axe de rotation, et un élément de blocage de rotation du deuxième organe taraudé, le premier organe fileté coopérant par une liaison de vissage avec le deuxième organe taraudé autour du premier axe de rotation, l'élément de blocage étant fixé à une platine intérieure, sur laquelle l'arbre intermédiaire est monté rotatif, la platine intérieure étant montée dans le bâti..

Suivant un mode de réalisation de l'invention, le premier organe fileté est une vis fixée à ou formée par l'arbre intermédiaire, le deuxième organe taraudé est un écrou vissé autour de la vis.

Suivant un autre mode de réalisation de l'invention, le mécanisme de transformation de rotation comporte un premier organe taraudé, qui est fixé à ou formé par l'arbre intermédiaire, un deuxième organe fileté, qui est solidaire en translation de l'arbre central le long du premier axe de rotation, et un élément de blocage de rotation du premier organe taraudé, le premier organe taraudé coopérant par une liaison de vissage avec le deuxième organe fileté autour du premier axe de rotation, l'élément de blocage étant fixé à une platine intérieure, sur laquelle l'arbre intermédiaire est monté rotatif, la platine intérieure étant montée dans le bâti, le premier organe taraudé est un écrou fixé à l'arbre intermédiaire, le deuxième organe fileté est une vis, l'écrou étant vissé autour de la vis.

Suivant un mode de réalisation de l'invention, le mécanisme de transformation de rotation comporte un manchon, qui comporte un premier côté fixé autour du deuxième organe et un deuxième côté dans lequel est fixé un palier de support de rotation de l'arbre central autour du premier axe de rotation.

Suivant un mode de réalisation de l'invention, le palier de support de rotation est un montage de roulement, comportant au moins une première partie de roulement fixée dans le deuxième côté du manchon et au moins une deuxième partie de roulement, qui est fixée à l'arbre central et qui est rotative par rapport à la première partie de roulement.

Suivant un mode de réalisation de l'invention, le manchon est inséré dans une cavité intérieure de l'arbre primaire rotatif et est mobile en translation le long du premier axe de rotation dans la cavité intérieure.

Suivant un mode de réalisation de l'invention, le dispositif d'accouplement comporte une première partie d'accouplement fixée à l'arbre central rotatif et une deuxième partie d'accouplement fixée dans la pièce de fixation d'épaulement, la première partie d'accouplement coopérant par une liaison de glissement avec la deuxième partie d'accouplement le long du premier axe de rotation et de solidarité en rotation avec la deuxième partie d'accouplement.

Suivant un mode de réalisation de l'invention, la première partie d'accouplement est saillante sur l'arbre central rotatif transversalement au premier axe de rotation, la deuxième partie d'accouplement est une rainure, qui s'étend sur une surface intérieure de la pièce de fixation d'épaulement le long du premier axe de rotation et dans laquelle la première partie d'accouplement peut être déplacée en translation le long du premier axe de rotation en étant bloquée en rotation autour du premier axe de rotation.

Suivant un mode de réalisation de l'invention, dans la position haute, le pion central est rentré au-dessus d'une surface inférieure de l'épaulement périphérique.

Suivant un mode de réalisation de l'invention, la pièce de fixation d'épaulement et l'épaulement périphérique sont d'une seule pièce.

Un deuxième objet de l'invention est un procédé de soudure par friction malaxage de pièces tel que défini dans la revendication 17, avec les étapes suivantes :
on monte le bâti de la tête de soudage décrite ci-dessus sur une machine, la pièce d'interface extérieure de la tête dépassant d'une surface supérieure du bâti de la tête de soudage et étant fixée à une broche rotative de la machine,
on commande par un dispositif de contrôle du moteur la sortie du pion central hors de l'épaulement périphérique jusqu'à une position basse,
on commande par un dispositif de contrôle de la machine la rotation de la broche de la machine pour provoquer la rotation de l'épaulement périphérique et du pion central autour du premier axe de rotation,
on abaisse par le dispositif de contrôle de la machine la tête vers les pièces, pour abaisser l'épaulement périphérique et le pion central faisant saillie hors de l'épaulement périphérique, qui tournent tous les deux autour du premier axe de rotation, contre les pièces,
on commande par le dispositif de contrôle du moteur la translation du pion central par rapport à l'épaulement périphérique pour qu'une extrémité inférieure du pion central soit rapprochée ou éloignée par rapport à l'épaulement périphérique, pendant que d'une part l'épaulement périphérique, qui se trouve en appui contre les pièces, et d'autre part le pion central tournent tous les deux autour du premier axe de rotation,
on éloigne la tête par rapport aux pièces.

L'invention sera mieux comprise à la lecture de la description qui va suivre, donnée uniquement à titre d'exemple non limitatif en référence aux figures ci-dessous des dessins annexés.
La figure 1 représente une vue schématique en perspective d'une soudure par friction malaxage pouvant être effectuée par la tête et le procédé suivant des modes de réalisation de l'invention.
La figure 2 représente une vue schématique en perspective d'un outil de soudage, pouvant être à pion rétractable ou non, et pouvant être monté sous la tête de soudage suivant des modes de réalisation de l'invention.
La figure 3 représente une vue schématique en perspective d'une tête de soudage suivant des modes de réalisation de l'invention.
La figure 4 représente une vue schématique en perspective éclatée d'un outil de soudage rétractable pouvant être monté sous la tête de soudage suivant des modes de réalisation de l'invention.
La figure 5 représente une vue schématique en coupe verticale d'une tête de soudage suivant des modes de réalisation de l'invention dans une position basse du pion central.
La figure 6 représente une vue schématique en coupe verticale d'une tête de soudage suivant des modes de réalisation de l'invention dans une position haute et rétractée du pion central.
La figure 7 représente une vue schématique de dessus de l'intérieur d'une tête de soudage suivant des modes de réalisation de l'invention.
La figure 8 représente une vue schématique en coupe verticale d'une tête de soudage suivant des modes de réalisation de l'invention dans une position intermédiaire du pion central.
La figure 9 représente une vue schématique en perspective d'une partie de la tête de soudage suivant des modes de réalisation de l'invention
La figure 10 représente une vue schématique en perspective éclatée d'une partie de la tête de soudage suivant des modes de réalisation de l'invention.
La figure 11 représente une vue schématique en coupe verticale d'une partie de la tête de soudage suivant des modes de réalisation de l'invention dans la position basse du pion central.
La figure 12 représente une vue schématique en coupe verticale d'une partie de la tête de soudage suivant des modes de réalisation de l'invention dans la position haute du pion central.
La figure 13 représente une vue schématique en coupe verticale d'une partie de la tête de soudage suivant des modes de réalisation de l'invention dans la position basse du pion central.
La figure 14 représente une vue schématique en coupe verticale d'une partie de la tête de soudage suivant des modes de réalisation de l'invention dans la position haute du pion central.
La figure 15 représente une vue schématique en perspective d'une partie de la tête de soudage suivant des modes de réalisation de l'invention.
La figure 16 représente une vue schématique en perspective d'une partie de la tête de soudage suivant des modes de réalisation de l'invention.
La figure 17 représente une vue schématique en perspective coupée verticalement d'une partie de la tête de soudage suivant des modes de réalisation de l'invention.
La figure 18 représente un exemple de profil de pièces pouvant être soudées par la tête et le procédé suivant l'invention.
La figure 19 représente un exemple de soudures pouvant être effectuées sur des pièces par la tête et le procédé suivant l'invention.
La figure 20 représente un exemple d'organigramme du procédé suivant un mode de réalisation de l'invention.
La figure 21 représente un exemple d'organigramme du procédé suivant un mode de réalisation de l'invention.
La figure 22 représente une vue schématique en perspective éclatée de la tête de soudage montée sur une machine.
La figure 23 représente une vue schématique en perspective de la tête de soudage montée sur une machine.

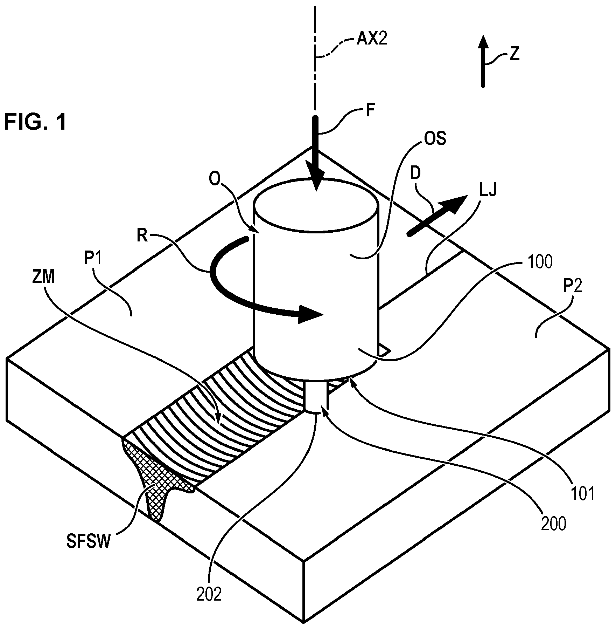

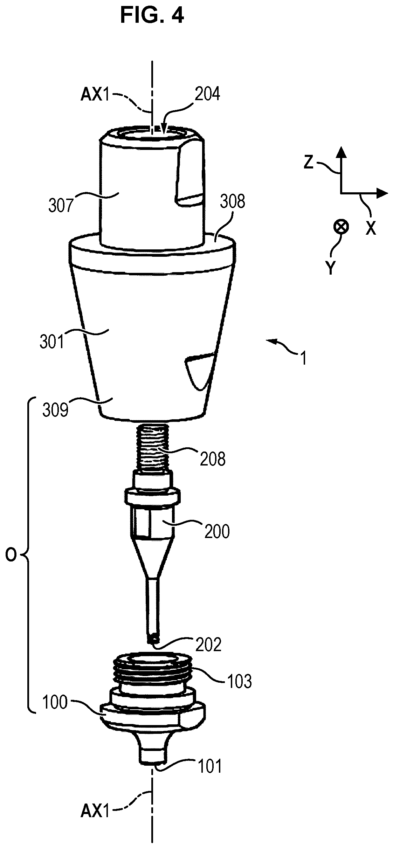

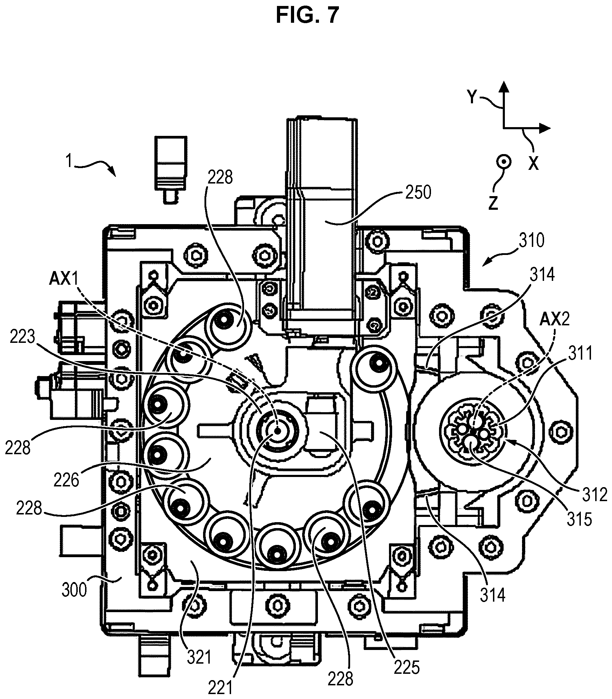

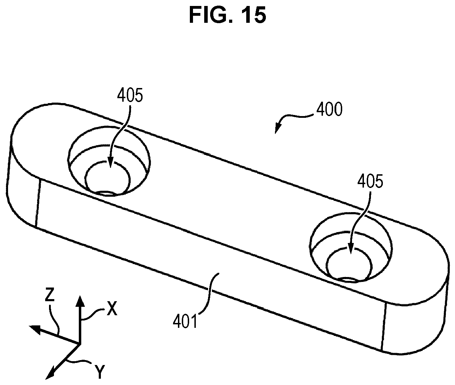

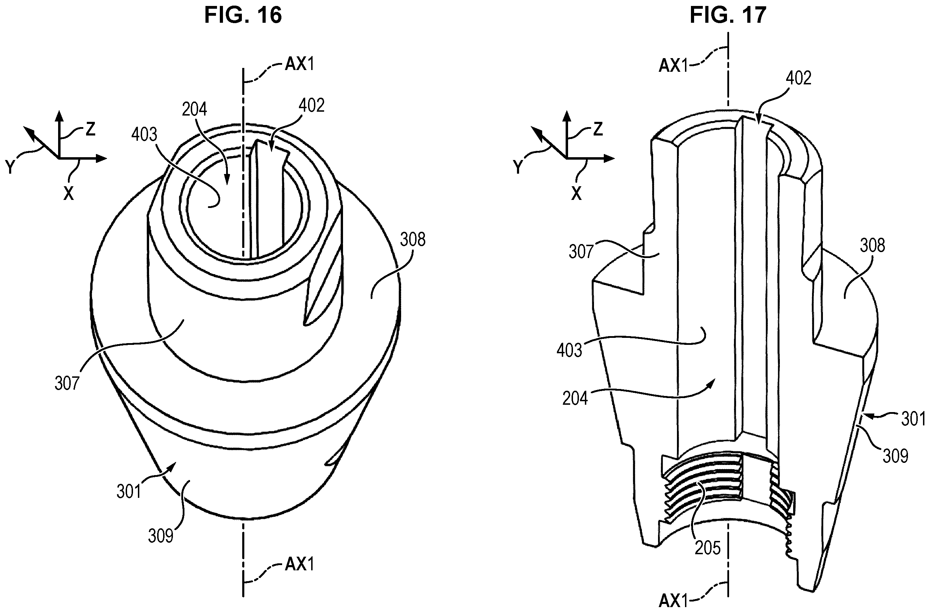

Aux figures 1 à 23, la tête 1 de soudage par friction malaxage suivant l'invention comporte un bâti 300, destiné à être fixé à un châssis C d'une machine M distincte de la tête 1, la tête 1 de soudage devant être montée sur la machine M. Cette machine M peut être une machine-outil M, par exemple une machine-outil M à commande numérique. La machine M comporte une broche B d'entraînement (ou nez de broche B), qui est montée rotative autour d'un axe AX2 par rapport au châssis C.

Sur la tête 1 peut être monté un outil O de soudage par friction malaxage. Cet outil O de soudage par friction malaxage comporte un épaulement périphérique 100 et un pion central 200 tournant et rétractable, qui est entouré par l'épaulement périphérique 100 autour d'un premier axe AX1 de rotation et qui est apte à faire saillie par rapport à l'épaulement périphérique 100 le long du premier axe AX1 de rotation. L'épaulement périphérique 100 est séparé du pion central 200, c'est-à-dire que l'épaulement périphérique 100 n'est pas d'une seule pièce avec le pion central 200. L'épaulement périphérique 100 comporte une surface inférieure 101 de soudage transversale au premier axe AX1 de rotation, tandis que le pion central 200 s'étend suivant le premier axe AX1 de rotation. Aux figures 1 à 23, le premier axe AX1 de rotation peut être par exemple vertical et parallèle à une direction Z verticale, orientée dans le sens ascendant, auxquelles une direction horizontale X, dite transversale, et une deuxième direction horizontale Y, dite de profondeur, perpendiculaire à la direction horizontale X, sont perpendiculaires.

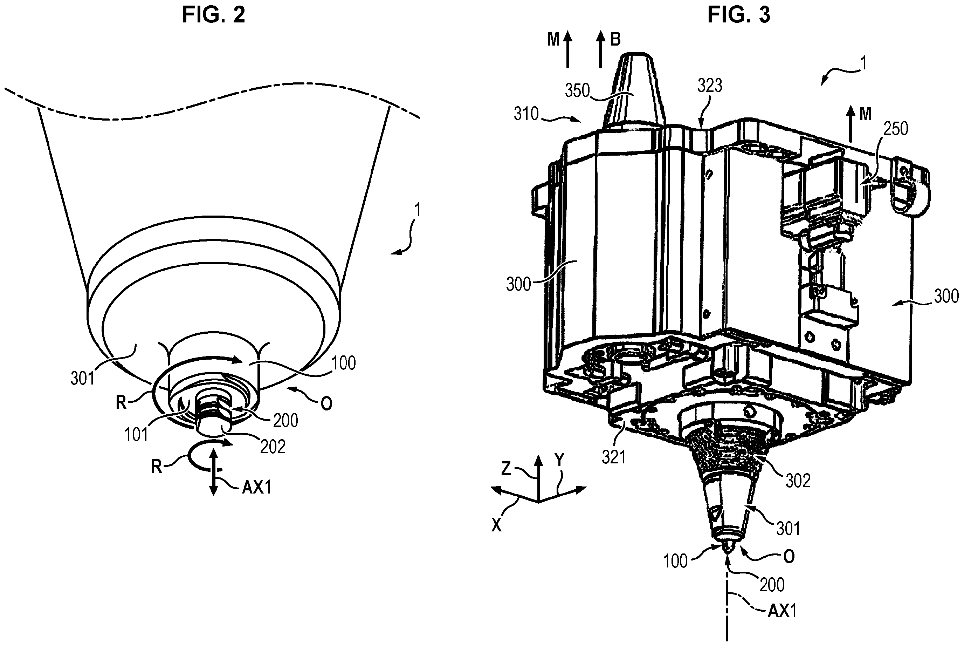

Ainsi que représenté aux figures 1 et 2, le soudage par friction malaxage (en anglais FSW pour « Friction Stir Welding ») est effectué par mise en rotation de l'épaulement périphérique 100 et du pion central 200 autour premier axe AX1 de rotation (selon la flèche R), pour faire pénétrer le pion central 200 dans deux (ou plus de deux) pièces à souder ou pièces à travailler P1 et P2, jusqu'à faire buter l'épaulement 100 contre ces pièces P1 et P2, puis déplacement de l'outil O selon une trajectoire prescrite D le long d'une ligne de joint LJ pour réaliser la soudure SFSW par friction malaxage. La pièce P1 peut être placée à côté de la pièce P2 pour réaliser une soudure bord à bord de ces pièces P1 et P2, ainsi que représenté à la figure 1, ou en dessous de la pièce P2 afin de réaliser une soudure par transparence, où l'outil O traverse totalement ou partiellement la pièce P2 dans ce dernier cas, ou dans une autre configuration. La vitesse de rotation de la broche B et donc de l'outil O peut être comprise entre 100 et 10 000 tours/minute. La rotation de l'outil O crée donc une zone ZM de malaxage de la matière des pièces P1 et P2. Le soudage par friction malaxage nécessite un mouvement de rotation R, un mouvement D d'avance et un effort F de forge.

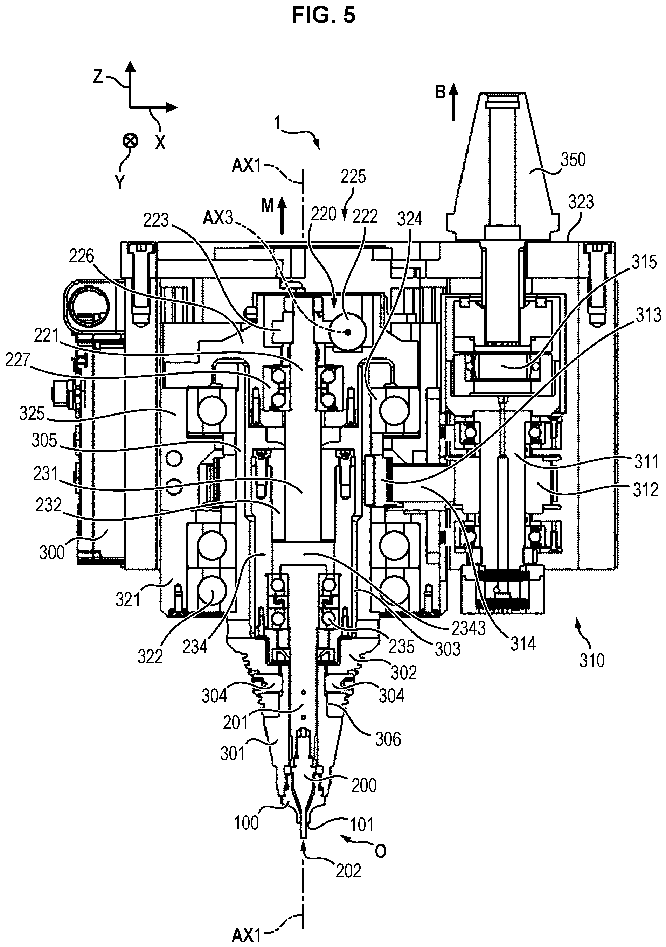

Ainsi que représenté aux figures 3 à 17, 22 et 23, la tête 1 comporte un arbre central rotatif 201 auquel, dans une position de montage de l'outil O sur la tête 1, est fixé le pion central 200. La tête 1 comporte une pièce 301 de fixation d'épaulement à laquelle, dans une position de montage de l'outil O sur la tête 1, est fixé l'épaulement périphérique 100. La pièce 301 de fixation d'épaulement est située autour de l'arbre central 201, qui dépasse cette pièce 301 de fixation d'épaulement vers le haut, ainsi que représenté aux figures 5, 6 et 8. La pièce 301 de fixation d'épaulement est centrée sur le même l'axe AX1 que l'arbre central rotatif 201. La pièce 301 de fixation d'épaulement peut être par exemple circulaire.

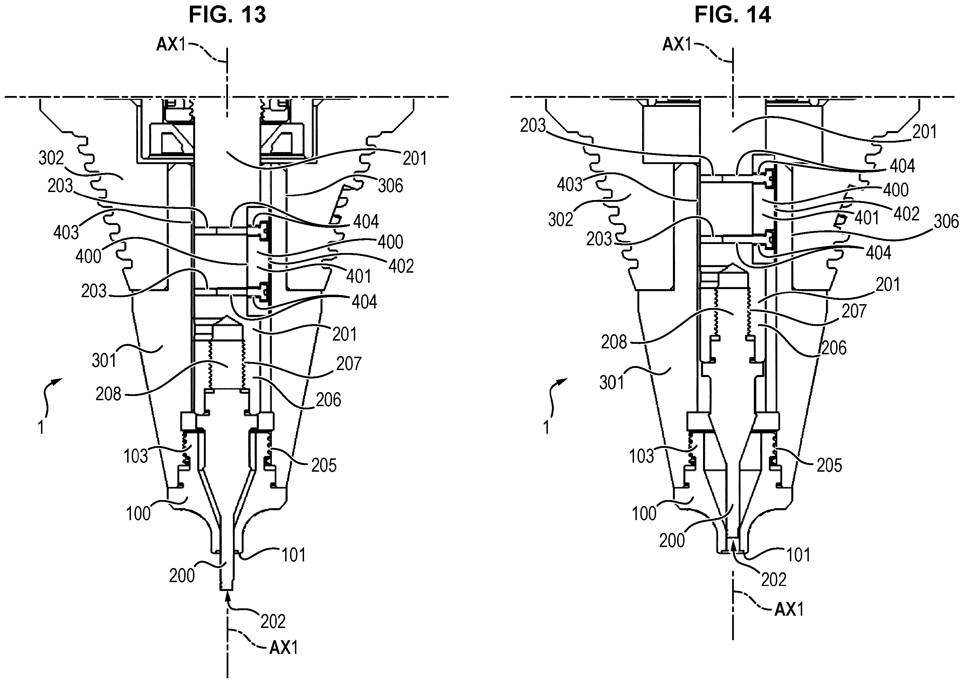

Aux figures 5, 6 et 8, la tête 1 comporte un arbre primaire rotatif 302 d'entraînement, pour entraîner en rotation à la fois la pièce 301 de fixation d'épaulement et l'arbre central rotatif 201, et donc à la fois l'épaulement périphérique 100 et le pion central 200 autour du premier axe AX1 de rotation, lorsque cet épaulement périphérique 100 est monté sur la pièce 301 de fixation d'épaulement et lorsque ce pion central 200 est monté sur l'arbre central rotatif 201. A cet effet, l'arbre central rotatif 201 et la pièce 301 de fixation d'épaulement comportent un dispositif 400 d'accouplement l'un à l'autre, pour que l'arbre central rotatif 201 soit solidaire en rotation de la pièce 301 de fixation d'épaulement autour du premier axe AX1 de rotation et pour que l'arbre central rotatif 201 soit libre en translation par rapport à la pièce 301 de fixation d'épaulement le long du premier axe AX1 de rotation. Le système 400 d'accouplement mécanique en rotation mécanique entre la pièce 201 et la pièce 301 permet un degré de liberté en translation entre la pièce 201 et la pièce 301. La pièce 301 de fixation d'épaulement est fixée à l'arbre primaire rotatif 302 d'entraînement, par exemple par des moyens 304 de fixation amovibles actionnables de l'extérieur, pouvant être par exemple une ou plusieurs vis 304 extérieures. Un mode de réalisation possible du dispositif 400 d'accouplement sera décrit ci-dessous en référence aux figures 13 à 17.

Suivant un mode de réalisation de l'invention, l'arbre primaire rotatif 302 d'entraînement est monté par un palier 322 de support de rotation ou roulement (par exemple un roulement à billes) sur une partie inférieure d'un carter 321 du bâti 300. De ce carter 321 dépassent vers le bas la pièce 301 de fixation d'épaulement, l'épaulement périphérique 100 et le pion central 200 lorsqu'il dépasse de l'épaulement périphérique 100.

Ainsi que représenté aux figures 5 à 8, 22 et 23, la tête 1 comporte une pièce 350 d'interface extérieure, qui est fixée à la broche B rotative de la machine M lorsque la tête 1 est montée sur la machine M. La pièce 350 d'interface extérieure dépasse du bâti 300, par exemple d'une surface supérieure 323 (paroi supérieure 323) du bâti 300. La pièce 350 d'interface extérieure est par exemple un arbre 350, qui est distinct des arbres 201, 302, 221, 251. La tête 1 comporte un premier dispositif 310 de transmission de rotation de la pièce 350 d'interface extérieure à l'arbre primaire rotatif 302 d'épaulement autour du premier axe AX1 de rotation. Ainsi, lorsque la tête 1 est montée sur la machine M, la rotation de la broche B de la machine M entraîne la rotation de la pièce 350 d'interface extérieure autour du deuxième axe AX2 de rotation de cette pièce 350 d'interface extérieure, laquelle entraîne par l'intermédiaire du premier dispositif 310 de transmission de rotation la rotation de l'arbre primaire rotatif 302.

Des modes de réalisation de ce premier dispositif 310 de transmission de rotation sont décrits ci-dessous, ainsi que représenté aux figures 5 à 8.

Suivant un mode de réalisation de l'invention, le premier axe AX1 de rotation, l'arbre central rotatif 201 et l'arbre primaire rotatif 302 sont décalés d'une distance non nulle (par exemple suivant la direction horizontale transversale X aux figures 5 à 8, 22 et 23) par rapport au deuxième axe AX2 de rotation de la pièce 350 d'interface extérieure. Le premier axe AX1 de rotation, l'arbre central rotatif 201 et l'arbre primaire rotatif 302 sont parallèles par rapport au deuxième axe AX2 de rotation de la pièce 350 d'interface extérieure. Bien entendu, dans d'autres modes de réalisation non représentés, le premier axe AX1 de rotation peut être confondu avec le deuxième axe AX2 de rotation.

Suivant un mode de réalisation de l'invention, le premier dispositif 310 de transmission de rotation comporte un arbre secondaire 311 relié à et solidaire en rotation de la pièce 350 d'interface extérieure autour du deuxième axe AX2 de rotation. Une première poulie 312 est fixée à l'arbre secondaire 311 autour du deuxième axe AX2 de rotation, une deuxième poulie 313 est fixée à l'arbre primaire rotatif 302 autour du premier axe AX1 de rotation et une courroie 314 de transmission de rotation est disposée autour de la première poulie 312 et autour la deuxième poulie 313. La courroie 314 permet de transmettre la rotation de la pièce 350 d'interface extérieure autour du deuxième axe AX2 de rotation à l'arbre primaire rotatif 302 autour du premier axe AX1 de rotation. Dans d'autres modes de réalisation non représentés, le premier dispositif 310 de transmission de rotation peut être à engrenage ou autre entre la pièce 350 d'interface extérieure et l'arbre primaire rotatif 302.

Suivant un mode de réalisation de l'invention, l'arbre secondaire 311 est relié à la pièce 350 d'interface extérieure par l'intermédiaire d'un accouplement 315 à griffes. Cela permet notamment d'absorber des vibrations engendrées par la soudure ou de compenser les éventuels désalignements avec la broche de la machine M.

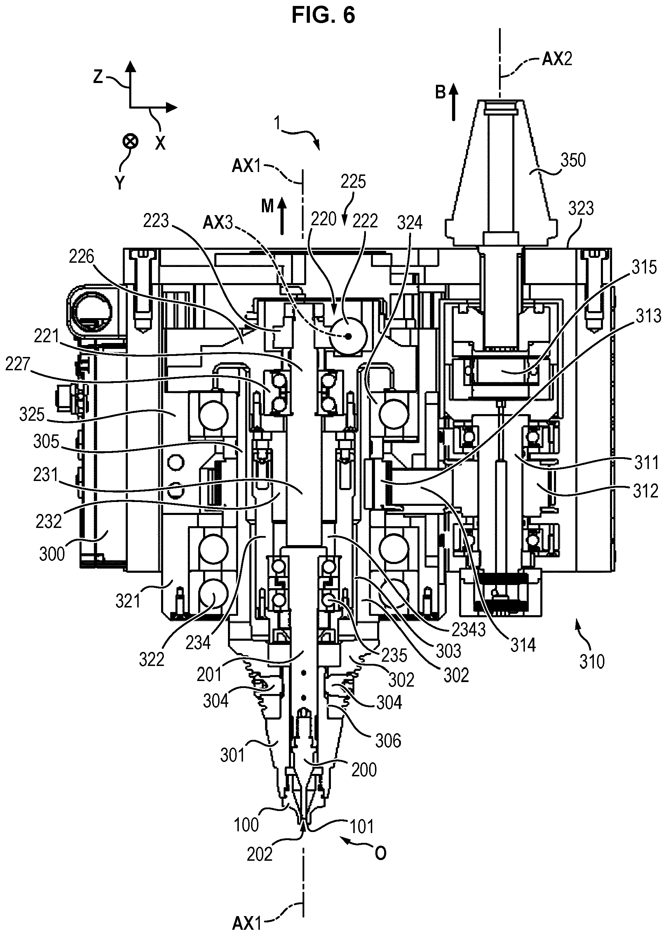

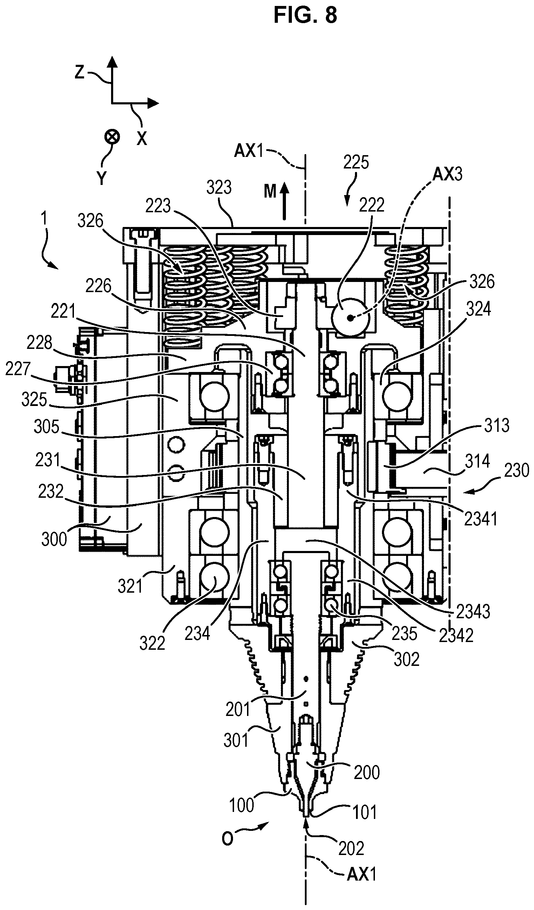

Ainsi que représenté aux figures 3 à 17, la tête 1 comporte un moteur 250 d'actionnement du pion rétractable 200 et un deuxième dispositif 210 d'entraînement en translation de l'arbre central rotatif 201 le long du premier axe AX1 de rotation à partir du moteur 250 et ce pendant la rotation de l'arbre central rotatif 201 et de la pièce 301 de fixation d'épaulement autour du premier axe AX1 de rotation et donc pendant la rotation de l'épaulement périphérique 100 et du pion central 200 autour du premier axe AX1 de rotation, lorsque cet épaulement périphérique 100 est monté sur la pièce 301 de fixation d'épaulement et lorsque ce pion central 200 est monté sur l'arbre central rotatif 201. Le deuxième dispositif 210 d'entraînement en translation permet de translater l'arbre central rotatif 201 par rapport à la pièce 301 de fixation d'épaulement et à l'arbre primaire rotatif 302 d'au moins une position basse de l'arbre central rotatif 201, représentée aux figures 1, 2, 3, 5, 11 et 13, dans laquelle l'extrémité inférieure 202 du pion central 200 dépasse vers le bas par rapport à l'épaulement périphérique 100 et à sa surface inférieure 101 le long du premier axe AX1 de rotation, à une position haute de l'arbre central rotatif 201, représentée aux figures 6, 12 et 14, dans laquelle le pion central 200 ne dépasse pas vers le bas par rapport à l'épaulement périphérique 100 et à sa surface inférieure 101 le long du premier axe AX1 de rotation. Le pion central 200 et l'épaulement périphérique 100 sont ainsi dissociés en translation le long du premier axe AX1 de rotation. Bien entendu, le deuxième dispositif 210 d'entraînement en translation permet de translater l'arbre central rotatif 201 également de la position haute à la position basse. Le deuxième dispositif 210 d'entraînement en translation permet de maintenir l'arbre central rotatif 201 et donc le pion central 200 dans la position haute, dans la position basse et dans des positions intermédiaires (par exemple la position intermédiaire de la figure 8) entre cette position haute et cette position basse, et ce pendant la rotation de l'arbre central rotatif 201 et de la pièce 301 de fixation d'épaulement autour du premier axe AX1 de rotation et donc pendant la rotation de l'épaulement périphérique 100 et du pion central 200 autour du premier axe AX1 de rotation, lorsque cet épaulement périphérique 100 est monté sur la pièce 301 de fixation d'épaulement et lorsque ce pion central 200 est monté sur l'arbre central rotatif 201.

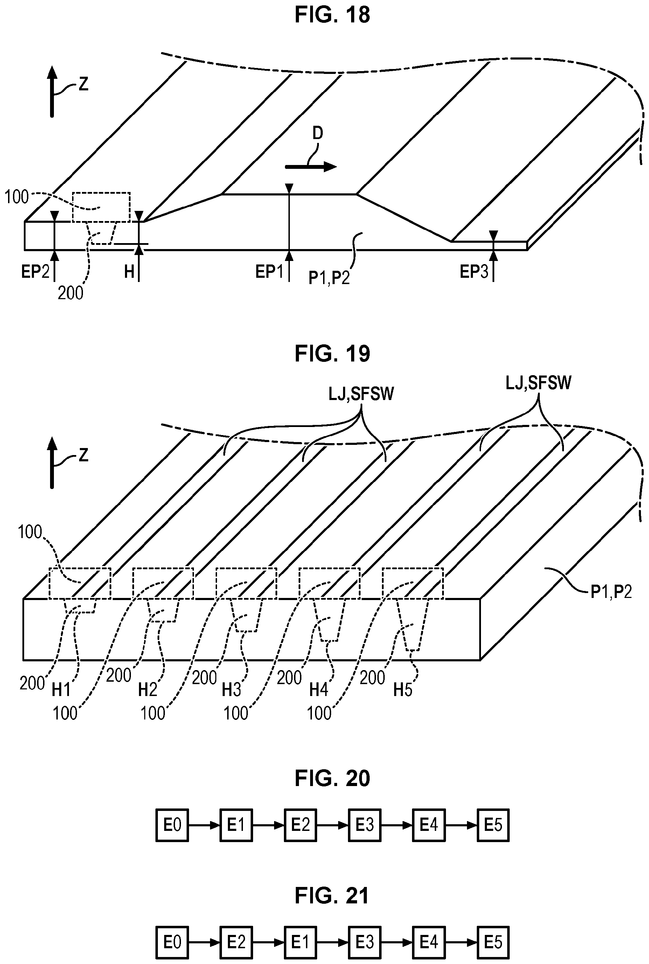

Le procédé de soudure par friction malaxage des pièces P1, P2 à l'aide de la tête 1 de soudage montée sur la machine M comporte les étapes décrites ci-dessous en référence aux figures 20 et 21.

On fixe initialement la pièce 350 d'interface extérieure de la tête 1 à la broche rotative B de la machine M, lors de l'étape initiale E0.

Après l'étape initiale E0, on commande lors de l'étape E1 par un dispositif de contrôle du moteur 250 (par exemple interface homme-machine) la sortie ou la rentrée du pion central 200 hors de l'épaulement périphérique 100 jusqu'à la position basse.

Après l'étape initiale E0, on commande lors de l'étape E2 par un dispositif de contrôle de la machine M (par exemple interface homme-machine) la rotation de la broche B de la machine M pour provoquer la rotation du pion central 200 et de l'épaulement périphérique 100 autour du premier axe AX1 de rotation.

Après l'étape E1 ou E2, on abaisse lors de l'étape E3 par le dispositif de contrôle de la machine M la tête 1 par exemple vers la pièce P1 et/ou P2, pour abaisser l'épaulement périphérique 100 et le pion central 200 faisant saillie hors de l'épaulement périphérique 100, qui tournent tous les deux autour du premier axe AX1 de rotation, contre la pièce P1 et/ou P2.

Après l'étape E3, on commande lors de l'étape E4 par le dispositif de contrôle du moteur 250 la translation du pion central 200 par rapport à l'épaulement périphérique 100 pour que l'extrémité inférieure 202 du pion central 200 soit rapprochée ou éloignée par rapport à l'épaulement périphérique 100, pendant que d'une part l'épaulement périphérique 100 qui se trouve en appui contre les pièces P1, P2, et d'autre part le pion central 200 tournent tous les deux autour du premier axe AX1 de rotation.

Après l'étape E4, on éloigne lors de l'étape E5 la tête 1 par rapport aux pièces P1, P2.

Suivant un mode de réalisation de l'invention, représenté à la figure 20, l'étape E1 est antérieure à l'étape E2.

Suivant un mode de réalisation de l'invention, représenté à la figure 21, l'étape E2 est antérieure à l'étape E1.

Ainsi, pour effectuer une soudure par friction malaxage, on commande par un dispositif de contrôle du moteur 250 la sortie de l'extrémité inférieure 202 du pion central 200 hors de l'épaulement périphérique 100 vers le bas jusqu'à une position intermédiaire ou jusqu'à la position basse et on l'y maintient dans cette position, où l'extrémité inférieure 202 du pion central 200 est saillante vers le bas hors de l'épaulement périphérique 100 (étape E1). On fait tourner par le dispositif de contrôle de la machine M la broche B de celle-ci pour provoquer la rotation de la pièce 350 d'interface extérieure autour du deuxième axe AX2 de rotation et, par l'intermédiaire du premier dispositif 310 de transmission, la rotation de l'arbre primaire rotatif 302 autour du premier axe AX1 de rotation, et donc la rotation de la pièce 301 de fixation de l'épaulement 100 et par ce fait la rotation du pion central 200 et la rotation de l'épaulement périphérique 100 autour du premier axe AX1 de rotation (étape E2). Puis, on abaisse par le dispositif de contrôle de la machine M la tête 1 vers les pièces P1 et P2, pour abaisser la surface inférieure 101 de l'épaulement périphérique 100 et le pion central 200 saillant vers le bas hors de cet l'épaulement périphérique 100, qui tournent tous les deux autour du premier axe AX1 de rotation, contre par exemple la pièce P1 et/ou P2, et on déplace la tête 1 par rapport aux pièces P1 et P2 pour effectuer la ligne SFSW de soudure le long de la ligne de joint LJ selon la figure 1 (étape E3). A la fin de la ligne SFSW de soudure, on maintient en hauteur la tête 1 et donc l'arbre primaire rotatif 302 d'épaulement et l'épaulement périphérique 100 contre les pièces P1 et P2 et on commande par le dispositif de contrôle du moteur 250 la remontée du pion central 200 en translation par rapport à l'épaulement périphérique 100 pour que l'extrémité inférieure 202 du pion central 200 soit abaissée dans une position intermédiaire ou basse ou soit remontée dans une position intermédiaire ou rétractée dans l'épaulement périphérique 100 dans la position haute (étape E4), et ceci par exemple pendant la rotation du premier dispositif 310 de transmission autour du deuxième axe AX2 et pendant la rotation de l'ensemble arbre primaire rotatif 302, pièce 301 de fixation d'épaulement, pion central 200 et épaulement périphérique 100 autour du premier axe AX1 de rotation. Dans cette position haute rétractée, l'extrémité inférieure 202 du pion central 200 peut être au même niveau que la surface inférieure 101 de l'épaulement périphérique 100 ou à un niveau plus haut que la surface inférieure 101 de l'épaulement périphérique 100. La remontée du pion central 200 au moins jusqu'à la position haute permet avantageusement de laisser dans la ligne SFSW de soudure une surface quasi plane et horizontale, remplie de matière en-dessous de l'extrémité inférieure 202 du pion central 200 et en-dessous de l'épaulement périphérique 100, sans laisser de trou dans cette ligne SFSW de soudure sous celui-ci. Puis, on remonte la tête 1 par rapport aux pièces P1 et P2 (étape E5). La tête 1 permet d'atteindre les forces nécessaires à l'extrémité inférieure 202 du pion central 200 pour effectuer le rebouchage de ce trou ou souder plusieurs épaisseurs dans la même soudure. La translation du pion central 200 suivant le premier axe AX1 a pu être implémentée en déportant le deuxième axe AX2 d'entraînement en rotation de l'outil O de soudage grâce au premier dispositif 310 de transmission de rotation.

Le fait que l'on puisse régler différentes hauteurs de dépassement de l'extrémité inférieure 202 du pion central 200 vers le bas sous la surface inférieure 101 de l'épaulement périphérique 100 dans les positions intermédiaires et la position basse (étape E4) permet également de souder différentes épaisseurs des pièces P1 et P2, ainsi que représenté par exemple à la figure 19 pour les différents hauteurs H1, H2, H3, H4 et H5, sans avoir à effectuer de changement de l'outil O. Cette fonction permet en autre d'éviter d'obtenir un trou en fin de soudure.

Le fait que l'on puisse régler différentes hauteurs H de dépassement de l'extrémité inférieure 202 du pion central 200 vers le bas sous la surface inférieure 101 de l'épaulement périphérique 100 dans les positions intermédiaires et la position basse (étape E4) permet également de modifier au cours du déplacement horizontal D de l'outil O contre les pièces P1 et P2 le long de la ligne de joint LJ la hauteur H de dépassement de l'extrémité inférieure 202 du pion central 200 vers le bas sous la surface inférieure 101 de l'épaulement périphérique 100 dans les positions intermédiaires et la position basse à la figure 18, et ce d'une manière continue (cela serait également possibles par étages de hauteur) pour tenir compte des variations d'épaisseur des pièces P1 et P2 (la hauteur H de dépassement pouvant être augmentée pour les grandes épaisseurs (par exemple E1 = 3 mm à la figure 18) par rapport aux épaisseurs moyennes (par exemple E2 = 1.5 mm à la figure 18); la hauteur H de dépassement pouvant être diminuée pour les petites épaisseurs (par exemple E3 = 0.4 mm à la figure 18) par rapport aux épaisseurs moyennes (par exemple E2 = 1.5 mm à la figure 18)).

Bien entendu, le deuxième dispositif 210 d'entraînement peut translater l'arbre central rotatif 201 le long du premier axe AX1 de rotation à partir du moteur 250 également en l'absence de rotation de l'arbre central rotatif 201, de la pièce 301 de fixation d'épaulement, de l'épaulement périphérique 100 et du pion central 200 autour du premier axe AX1 de rotation.

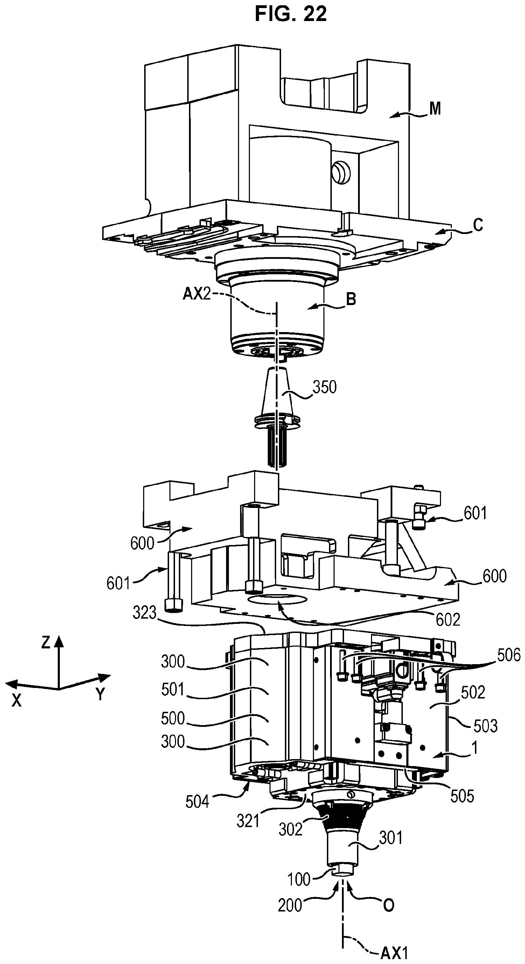

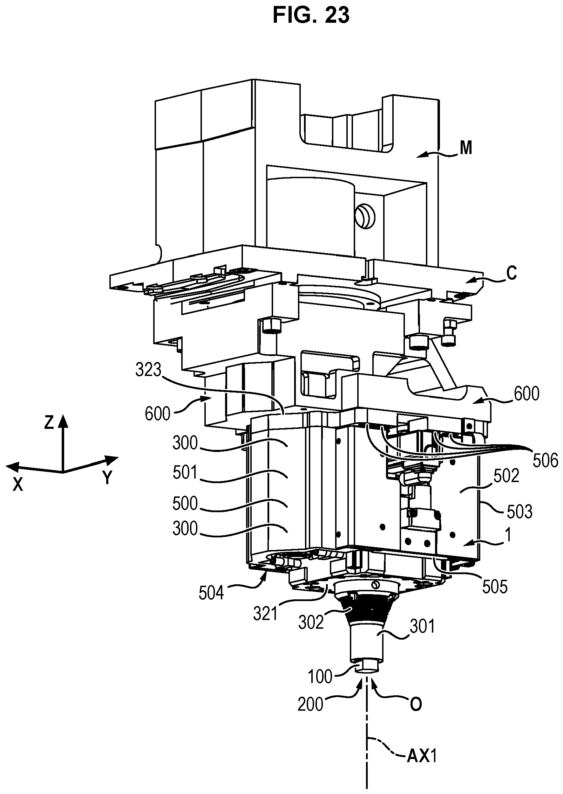

On décrit ci-dessous en référence aux figures 22 et 23 la tête 1 de soudage, lorsqu'elle est dans une position de montage sur la machine M et un mode de réalisation de la tête 1 de soudage. La tête 1 de soudage forme un effecteur 1.

Suivant un mode de réalisation de l'invention, le bâti 300 peut comporter un boîtier extérieur 500 (rigide) comportant la paroi supérieure 323, d'autres parois extérieures latérales 501, 502, 503, 504, fixées à la paroi supérieure 323, et une paroi inférieure 505. Dans le boîtier extérieur 500 se trouvent les différentes parties de la tête 1. L'arbre primaire rotatif 302, la pièce 301 de fixation d'épaulement, le pion central 200 et l'épaulement périphérique 100 dépassent du boîtier extérieur 500, à savoir de la paroi inférieure 505. Le pion central 200 dépasse de la surface inférieure 101 de l'épaulement périphérique 100 dans les positions intermédiaires et dans la position basse. Les parois 323, 501, 502, 503, 504, 505 peuvent être rigides et/ou partiellement planes et/ou entièrement planes.

Dans la position de montage de la tête 1 de soudage sur la machine M, la surface supérieure 323 de la tête 1 de soudage et/ou le boîtier 500 est fixée à un adaptateur 600 (ou pièce 600 d'adaptation ou pièce 600 de fixation). L'adaptateur 600 est fixé au châssis C de la machine M. La tête 1 de soudage et/ou la surface supérieure 323 et/ou le boîtier 500 peut comporter des organes 506 de fixation ou d'assemblage, pour fixer ou assembler la tête 1 de soudage et/ou la surface supérieure 323 et/ou le boîtier 500 à l'adaptateur 600. L'adaptateur 600 peut comporter des organes 601 de fixation ou d'assemblage, pour fixer ou assembler l'adaptateur 600 au châssis C de la machine M. Les organes 506 de fixation peuvent être ou comprendre par exemple des vis 506 ou des boulons 506, ou des tiges 506, ou autres. Les organes 601 de fixation peuvent être ou comprendre par exemple des vis 601 ou des boulons 601, ou des tiges 601, ou autres. L'adaptateur 600 comporte un trou traversant 602 dans lequel passe la pièce 350 d'interface extérieure dans la position de montage de la tête 1 de soudage sur la machine M. Dans la position de montage de la tête 1 de soudage sur la machine M, la pièce 350 d'interface extérieure est fixée à la broche B de la machine M, par exemple par un accouplement mécanique. Dans la position de montage de la tête 1 de soudage sur la machine M, l'adaptateur 600 se trouve entre le châssis C et la surface supérieure 323.

Suivant un autre mode de réalisation de l'invention, l'adaptateur 600 est d'une seule pièce avec le boîtier 500 de la tête 1 de soudage et est inséparable du boîtier 500 de la tête 1 de soudage. Dans ce cas, les organes 506 de fixation en sont pas prévus.

On décrit ci-dessous des modes de réalisation du deuxième dispositif 210 d'entraînement en translation de l'arbre central 201 en référence aux figures 5 à 12.

Suivant un mode de réalisation de l'invention, le moteur 250 comporte un arbre tertiaire 251 rotatif autour d'un troisième axe AX3 de rotation. Le deuxième dispositif 210 d'entraînement en translation comporte un arbre intermédiaire 221, qui est déporté au-dessus de l'arbre central 201 et qui est coaxial au premier axe AX1 de rotation. Un mécanisme 220 de transmission de rotation de l'arbre tertiaire 251 rotatif du moteur 250 autour de son troisième axe AX3 de rotation à l'arbre intermédiaire 221 autour du premier axe AX1 de rotation est prévu dans le deuxième dispositif 210 d'entraînement en translation. En outre, un mécanisme 230 de transformation de la rotation de l'arbre intermédiaire 221 autour du premier axe AX1 de rotation en une translation de l'arbre central 201 le long du premier axe AX1 de rotation est prévu dans le deuxième dispositif 210 d'entraînement en translation.

On décrit ci-dessous des modes de réalisation de ces mécanismes 220 et 230.

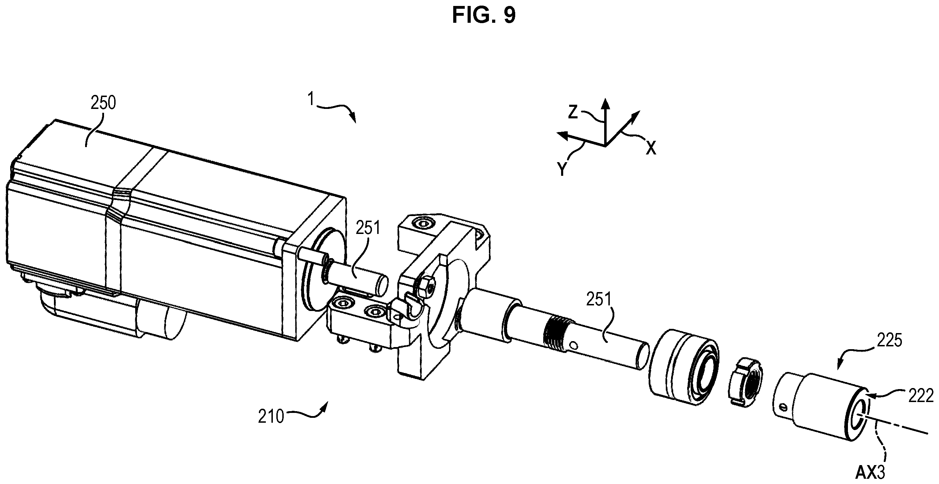

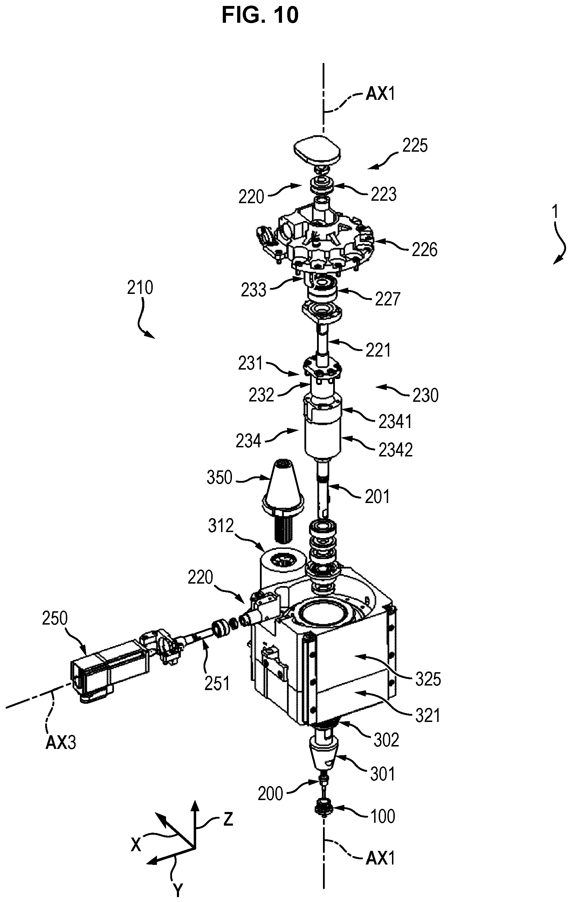

Suivant un mode de réalisation de l'invention, aux figures 9 et 10, le troisième axe AX3 de rotation de l'arbre tertiaire 251 du moteur 250 est déporté et transverse par rapport au premier axe AX1 de rotation, et peut être par exemple faire un angle non nul et par exemple perpendiculaire par rapport au premier axe AX1 de rotation. Le mécanisme 220 de transmission de rotation comporte un mécanisme 225 de renvoi d'angle de l'arbre tertiaire 251 rotatif autour du troisième axe AX3 de rotation à l'arbre intermédiaire 221 autour du premier axe AX1 de rotation.

Suivant un mode de réalisation de l'invention, aux figures 9 et 10, le mécanisme 225 de renvoi d'angle de l'arbre tertiaire 251 rotatif comporte au moins un premier organe 222 d'engrènement fixé à l'arbre tertiaire 251 et au moins un deuxième organe 223 d'engrènement fixé à l'arbre intermédiaire 221 et engrenant avec le premier organe 222 d'engrènement, le deuxième organe 223 d'engrènement étant mis en rotation autour du premier axe AX1 de rotation par la rotation du premier organe 222 d'engrènement autour du troisième axe AX3 de rotation, ces organes 22 et 223 formant un engrenage d'angle.

Suivant un mode de réalisation de l'invention, aux figures 9 et 10, le mécanisme 225 de renvoi d'angle de l'arbre tertiaire 251 rotatif comporte au moins une première vis sans fin 222 fixée à l'arbre tertiaire 251 et au moins une deuxième roue dentée 223 fixée à l'arbre intermédiaire 221, la deuxième roue dentée 223 engrenant avec la première vis sans fin 222 et étant mise en rotation autour du premier axe AX1 de rotation par la rotation de la une première vis sans fin 222 autour du troisième axe AX3 de rotation. Dans d'autres modes de réalisation de l'invention, le mécanisme 225 de renvoi d'angle de l'arbre tertiaire 251 rotatif peut être à engrenage ou à filetage entre l'arbre tertiaire 251 et l'arbre intermédiaire 221.

Suivant un autre mode de réalisation de l'invention, aux figures 9 et 10, le mécanisme 225 de renvoi d'angle de l'arbre tertiaire 251 rotatif comporte au moins une première roue dentée 222 fixée à l'arbre tertiaire 251 et au moins une deuxième roue dentée 223 fixée à l'arbre intermédiaire 221, la deuxième roue dentée 223 engrenant avec la première roue dentée 222. Les dents de la deuxième roue dentée 223 et de la première roue dentée 222 peuvent être coniques pour former un engrenage conique, ou autres.

Suivant un mode de réalisation de l'invention, aux figures 5, 6, 8 et 10 à 12, l'arbre intermédiaire 221 est monté rotatif autour du premier axe AX1 de rotation sans translation possible le long de ce premier axe AX1 de rotation sur une platine intérieure 226, laquelle est montée dans le bâti 300 et est fixée au carter 321. L'arbre intermédiaire 221 peut être monté par un palier 227 de support de rotation ou roulement 227 (par exemple un roulement 227 à billes) sur la platine intérieure 226 et peut traverser la platine intérieure 226.

Suivant un mode de réalisation de l'invention, aux figures 5 à 8 et 10 à 12, le mécanisme 230 de transformation de rotation qui comporte un filetage 231 (premier organe 231) sur la partie basse de l'arbre intermédiaire 221. Le mécanisme 230 de transformation de rotation comporte un deuxième organe taraudé 232, qui est solidaire en translation de l'arbre central 201 le long du premier axe AX1 de rotation. Le mécanisme 230 de transformation de rotation comporte un élément 233 de blocage de rotation du deuxième organe taraudé 232, cet élément 233 de blocage étant fixé à la platine intérieure 226. L'arbre intermédiaire 221 sur sa partie filetée 231 et le deuxième organe taraudé 232 sont vissés l'un par rapport à l'autre autour du premier axe AX1 de rotation et coopèrent l'un avec l'autre par leur filetage.

Suivant un mode de réalisation de l'invention, aux figures 5 à 8 et 10 à 12, le palier 227 de support de rotation ou roulement 227 et la platine intérieure 226 sont situés entre la deuxième roue dentée 223 située en haut dans la platine intérieure 226 et le mécanisme 230 de transformation de rotation, situé plus bas dans le bâti 300.

Suivant un mode de réalisation de l'invention, aux figures 5 à 8 et 10 à 12, l'arbre intermédiaire 221 forme sur sa partie d'extrémité inférieure une vis filetée 231, le deuxième organe taraudé 232 est un écrou 232 vissé autour de la vis de la partie inférieure de l'arbre 221.

Suivant un autre mode de réalisation de l'invention, non représenté aux figures, le premier organe 231 est taraudé et est un écrou 231 fixé à l'arbre intermédiaire 221 ou formant la partie d'extrémité inférieure de l'arbre intermédiaire 221, le deuxième organe 232 est fileté et est une vis 232, l'écrou 231 étant vissé autour de la vis 232.

Suivant un mode de réalisation de l'invention, aux figures 5 à 8 et 10 à 12, l'écrou 232 peut être formé par une bague 232 dont le taraudage intérieur est vissé sur le filetage extérieur 231 de la vis de la partie inférieure de l'arbre 221. L'écrou 232 et la vis 231 de la partie inférieure de l'arbre 221 peuvent être du type vis à bille, c'est-à-dire avec des billes entre l'écrou 232 et la vis 231.

Suivant un mode de réalisation de l'invention, aux figures 5 à 8 et 10 à 12, le mécanisme 230 de transformation de rotation comporte un manchon 234, par exemple globalement cylindrique circulaire autour du premier axe AX1 de rotation qui comporte un premier côté 2341 fixé autour du deuxième organe 232 et un deuxième côté 2342 (éloigné du premier côté 2342 le long du premier axe AX1 de rotation vers le bas) dans lequel est fixé un palier 235 de support de rotation de l'arbre central 201 autour du premier axe AX1 de rotation. Le manchon 234 délimite un compartiment intérieur vertical 2343 dans lequel sont fixés toute ou partie de la surface extérieure du deuxième organe 232 et le palier 235 de support de rotation de l'arbre central 201. Le manchon 234 peut être par exemple globalement cylindrique circulaire autour du premier axe AX1 de rotation.

Suivant un mode de réalisation de l'invention, aux figures 5 à 8 et 10 à 12, l'élément 233 de blocage de rotation peut être formé par une languette 233 saillante vers le bas le long de et à distance du premier axe AX1 de rotation, cette languette 233 étant fixée sous la platine intérieure 226 et ayant une surface plane, qui est parallèle au premier axe AX1 de rotation et qui est en appui extérieurement contre une surface plane (par exemple méplat), également parallèle au premier axe AX1 de rotation, du deuxième organe 232 et/ou du manchon 234.

Suivant un mode de réalisation de l'invention, aux figures 5 à 8 et 10 à 12, le palier 235 de support de rotation est un montage de roulement 235, comportant au moins une première partie 2351 de roulement fixée au deuxième côté 2342 du manchon 234 et au moins une deuxième partie 2352 de roulement, qui est fixée à l'arbre central 201 et qui est rotative par rapport à la première partie 2351 de roulement.

Suivant un mode de réalisation de l'invention, aux figures 5 à 8 et 10 à 12, le manchon 234 se trouve dans une cavité intérieure supérieure 303 de l'arbre primaire rotatif 302 et est entouré par un paroi cylindrique circulaire 305 de l'arbre primaire rotatif 302, cette paroi cylindrique circulaire 305 délimitant la cavité intérieure 303 autour du premier axe AX1 de rotation. Le manchon 234 est mobile en translation le long du premier axe AX1 de rotation dans la cavité intérieure 303. La paroi cylindrique circulaire 305 se prolonge vers le bas par la partie de l'arbre primaire rotatif 302 sortant vers l'extérieur du carter 321 du bâti 300 et portant la pièce 301 de fixation d'épaulement.

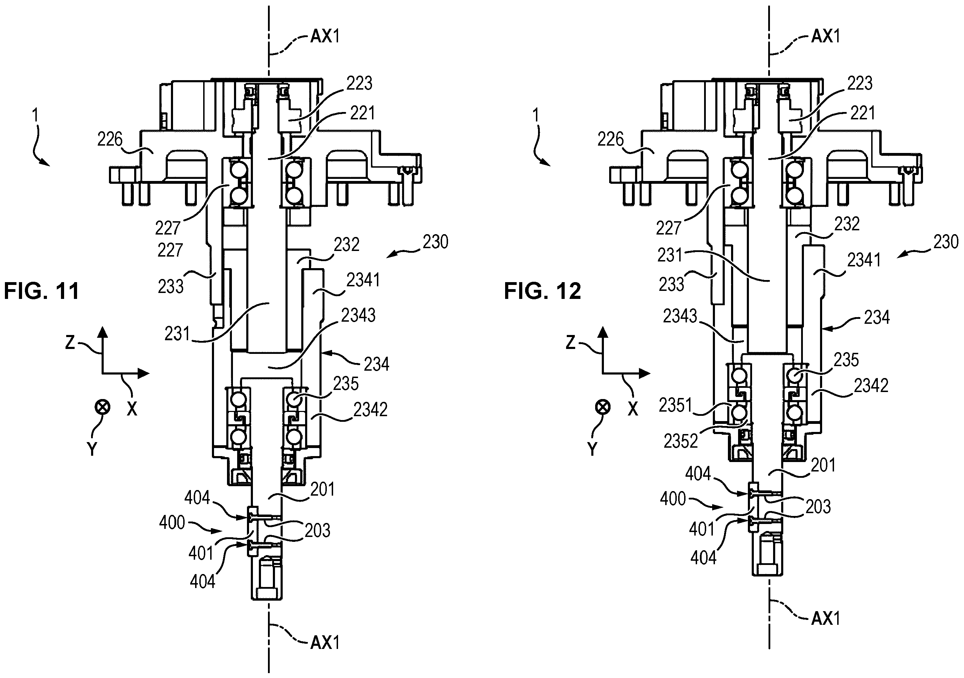

Ainsi, lorsque le moteur 250 fait tourner l'arbre tertiaire 251 dans un premier sens prescrit autour du troisième axe AX3 de rotation, l'arbre intermédiaire 221 et le premier organe 231 de la partie inférieure de l'arbre 221 tournent dans un deuxième sens prescrit autour du premier axe AX1 de rotation, ce qui fait remonter, du fait du blocage en rotation du deuxième organe 232 par l'élément 233, ce deuxième organe 232 et le manchon 234 le long du premier axe AX1 de rotation, par exemple pour passer de la position des figures 5 et 11 à la position des figures 6 et 12. Cela fait remonter dans l'arbre primaire rotatif 302 et dans le compartiment intérieur vertical 2343 du manchon 234 l'arbre central 201, qui est entraîné en rotation autour du premier axe AX1 de rotation par le premier dispositif 310 de transmission de rotation, et fait donc remonter le pion central 200 dans l'épaulement périphérique 100 pour passer de la position des figures 5 et 11 à la position des figures 6 et 12, pendant que le pion central 200 et l'épaulement périphérique 100 sont entraînés en rotation autour du premier axe AX1 de rotation par le premier dispositif 310 de transmission de rotation.

A l'inverse, lorsque le moteur 250 fait tourner l'arbre tertiaire 251 dans un troisième sens prescrit inverse du premier sens prescrit autour du troisième axe AX3 de rotation, l'arbre intermédiaire 221 et le premier organe 231 de la partie inférieure de l'arbre 221 tournent dans un quatrième sens prescrit inverse du deuxième sens prescrit autour du premier axe AX1 de rotation, ce qui fait descendre, du fait du blocage en rotation du deuxième organe 232 par l'élément 233, ce deuxième organe 232 et le manchon 234 le long du premier axe AX1 de rotation, par exemple pour passer de la position des figures 6 et 12 à la position des figures 5 et 11. Cela fait descendre dans l'arbre primaire rotatif 302 et dans le compartiment intérieur vertical 2343 du manchon 234 l'arbre central 201, qui est entraîné en rotation autour du premier axe AX1 de rotation par le premier dispositif 310 de transmission de rotation, et fait donc descendre le pion central 200 dans l'épaulement périphérique 100, par exemple pour passer de la position des figures 6 et 12 à la position des figures 5 et 11, pendant que le pion central 200 et l'épaulement périphérique 100 sont entraînés en rotation autour du premier axe AX1 de rotation par le premier dispositif 310 de transmission de rotation.

Suivant un mode de réalisation de l'invention, aux figures 5 à 8 et 10 à 12, la deuxième poulie 313 est fixée à la surface extérieure de la paroi cylindrique circulaire 305 de l'arbre primaire rotatif 302 autour du premier axe AX1 de rotation.

Suivant un mode de réalisation de l'invention, le palier 322 de support de rotation ou roulement (par exemple un roulement à billes) est monté autour du bas de la surface extérieure de la paroi cylindrique circulaire 305 de l'arbre primaire rotatif 302 autour du premier axe AX1 de rotation et dans le carter 321. Un autre palier 324 de support de rotation ou roulement (par exemple un roulement à billes) peut être monté autour du haut de la surface extérieure de la paroi cylindrique circulaire 305 de l'arbre primaire rotatif 302 autour du premier axe AX1 de rotation et dans une partie intérieure et supérieure 325 du carter 321 du bâti 300.

Suivant un mode de réalisation de l'invention, aux figures 13 à 17, le dispositif 400 d'accouplement comporte une première partie 401 d'accouplement fixée à l'arbre central rotatif 201 et une deuxième partie 402 d'accouplement fixée dans la pièce 301 de fixation d'épaulement. La première partie 401 d'accouplement et la deuxième partie 402 d'accouplement sont aptes à glisser le long du premier axe AX1 de rotation et sont solidaires en rotation l'une avec l'autre.

Suivant un mode de réalisation de l'invention, aux figures 13 à 17, le dispositif 400 d'accouplement est disposé sous le manchon 234 et sous le palier 235 de support de rotation de l'arbre central 201.

Suivant un mode de réalisation de l'invention, aux figures 13 à 17, la première partie 401 d'accouplement est saillante sur l'arbre central rotatif 201 transversalement au premier axe AX1 de rotation. La deuxième partie 402 d'accouplement est une rainure 402, qui s'étend sur une surface intérieure 403 de la pièce 301 de fixation d'épaulement le long du premier axe AX1 de rotation. La première partie 401 d'accouplement est apte à être déplacée en translation le long du premier axe AX1 de rotation dans la rainure 402 en étant bloquée en rotation autour du premier axe AX1 de rotation dans la rainure 402 pour abaisser et remonter l'arbre central rotatif 201 dans la pièce 301 de fixation d'épaulement.

Suivant un mode de réalisation de l'invention, aux figures 13 à 17, la première partie 401 d'accouplement est formée par une clavette 401 saillante, fixée sur l'arbre central rotatif 201 par une ou plusieurs vis 404 traversant un ou plusieurs trous 405 de la clavette 401 et vissés dans un ou plusieurs taraudages transversaux 203 de l'arbre central rotatif 201.

Suivant un autre mode de réalisation de l'invention, non représenté aux figures, la deuxième partie 402 d'accouplement est saillante sur la surface intérieure 403 de la pièce 301 de fixation d'épaulement transversalement au premier axe AX1 de rotation, et la première partie 401 d'accouplement est une rainure, qui s'étend sur l'arbre central rotatif 201 le long du premier axe AX1 de rotation. La deuxième partie 402 d'accouplement peut être formée par une clavette 401 saillante, fixée sur la surface intérieure 403 de la pièce 301 de fixation d'épaulement par une ou plusieurs vis 404 traversant un ou plusieurs trous 405 de la clavette 401 et vissés dans un ou plusieurs taraudages transversaux 203 de la pièce 301 de fixation d'épaulement.

Dans des modes de réalisation de l'invention, le système 400 d'accouplement mécanique peut comporter une partie mâle 401 d'accouplement et une partie femelle 402 d'accouplement. La partie mâle 401 d'accouplement peut se trouver sur la pièce 301 ou inversement sur l'arbre central rotatif 201. La partie femelle 402 d'accouplement peut se trouver sur la pièce 301 ou inversement sur l'arbre central rotatif 201.

Suivant un mode de réalisation de l'invention, aux figures 3 à 17, l'arbre primaire rotatif 302 d'entraînement comporte une cavité verticale inférieure 306, qui communique avec sa cavité intérieure supérieure 303 et qui est traversée le long du premier axe AX1 de rotation par l'arbre central rotatif 201 et par une partie supérieure 307 de la pièce 301 de fixation d'épaulement entourant l'arbre central rotatif 201. La pièce 301 de fixation d'épaulement comporte une partie inférieure 309 plus large que la partie supérieure 307 et raccordée à cette dernière par un flanc transversal 308 tourné vers le haut et monté contre une surface inférieure d'extrémité de l'arbre primaire rotatif 302 d'entraînement. La partie inférieure 309 a par exemple une surface extérieure globalement conique autour du premier axe AX1 de rotation. La pièce 301 de fixation d'épaulement comporte le long du premier axe AX1 de rotation un évidement vertical 204, dans lequel passent l'arbre central rotatif 201 et le pion central 200. Les moyens 304 de fixation amovibles sont prévus sur la partie supérieure 307 de la pièce 301 de fixation d'épaulement. La deuxième partie 402 d'accouplement est disposée dans l'évidement vertical 204. La pièce 301 de fixation d'épaulement peut comporter dans sa partie inférieure 309 un taraudage intérieur 205 dans lequel est vissé un filetage supérieur 103 de l'épaulement périphérique 100 dans la position de montage de l'outil O sur la tête 1. L'arbre central rotatif 201 peut comporter dans sa partie inférieure 206 un taraudage intérieur 207 dans lequel est vissé un filetage supérieur 208 du pion central 200 dans la position de montage de l'outil O sur la tête 1.

Suivant un mode de réalisation de l'invention, aux figures 3, 4, 5, 6 et 8, le carter 321 est coulissant le long du premier axe AX1 de rotation par rapport au bâti 300 et est un coulisseau 321. Le carter 321 est guidé en translation dans le bâti 300 le long du premier axe AX1 de rotation. Un ou plusieurs élément élastique 326 de report des efforts axiaux est interposé entre une surface supérieure du carter 321 (à savoir contre la platine intérieure 226) et la surface supérieure 323 du bâti 300. Cela permet d'implémenter un contrôle des efforts exercés sur la machine via la tête 1 par les pièces P1 et P2 lors de la soudure par friction malaxage. Le ou les élément élastique 326 exerce une précontrainte poussant le carter 321 à s'éloigner de la surface supérieure 323 du bâti 300 vers le bas. Sur le bâti 300 est prévu une ou plusieurs butée, contre laquelle vient en appui une partie correspondante du carter 321 pour retenir le carter 321 dans le bâti 300. Suivant un mode de réalisation, il est prévu plusieurs éléments 326 élastiques répartis autour du premier axe AX1 de rotation et autour de l'arbre intermédiaire 221. L'élément élastique 326 comporte par exemple au moins un ressort 326 de compression, par exemple plusieurs ressorts 326 de compression répartis autour du premier axe AX1 de rotation. Ce ou ces éléments 326 forment un système d'adaptation aux variations de distance entre la broche B et les pièces P1, P2 selon le premier axe AX1 de rotation. Bien entendu, il peut être prévu à la place du ou des élément élastique 326 de report des efforts axiaux tout autre élément d'actionnement linéaire suivant l'axe AX1, comme par exemple un vérin, ou autre.

Ainsi, lorsque la tête 1, par l'intermédiaire de l'abaissement du châssis C, est abaissée vers les pièces P1, P2 à souder, les vibrations remontant de l'outil O vers la pièce 301 de fixation d'épaulement, vers l'arbre central 201 suivant le premier axe AX1 de rotation sont amorties par le ou les élément élastique 326 et ne sont donc pas ou très peu transmises à la broche B de la machine M. Les efforts axiaux exercés sur l'outil O sont transmis au palier constitué par exemple par le roulement 322, puis à l'élément élastique 326, lequel absorbe ces efforts axiaux, qui sont alors reportés sur le bâti 300 et donc le châssis C de la machine M, sans passer par la broche B de cette machine M. On protège ainsi la broche B de la machine M vis-à-vis des efforts axiaux de forgeage, et également des efforts transversaux de forgeage pouvant être dus au déplacement de l'outil O transversalement à l'axe AX1 selon le déplacement D. La broche B de la machine M n'a donc à fournir à la tête 1 que le couple de rotation pour souder. La tête 1 procure ainsi une sécurité vis-à-vis de la broche B et dispose d'un contrôle d'effort, c'est-à-dire un système permettant de garder un effort de forge dans un intervalle largement acceptable pour la qualité des soudures malgré les défauts géométriques des pièces, par exemples causés par des surfaces brutes. Cela permet de réaliser des soudures répétables. L'interface homme-machine permet de contrôler les différents paramètres de la machine M et permet d'avertir l'opérateur s'il y a un incident, de faire du contrôle qualité des soudures en enregistrant les paramètres de soudure. L'interface homme-machine et l'automatisation du pion rétractable 200 peuvent s'effectuer via un ordinateur et un automate autonomes et indépendants de la machine-outil à commande numérique, rendant le système complètement universel.

Suivant un mode de réalisation de l'invention, aux figures 3, 4, 5, 6 et 8, chaque élément élastique 326 peut être par exemple un ressort hélicoïdal de compression ou une rondelle élastique (dite Belleville) ou autre. La platine intérieure 226 peut comporter sur sa surface supérieure un ou plusieurs renfoncements 228 dans lequel est inséré l'extrémité inférieure du ou des élément élastique 326 pour l'y bloquer.

Suivant un mode de réalisation de l'invention, aux figures 3, 4, 5, 6 et 8, le carter 321 est solidaire d'au moins un premier rail de guidage axial le long du premier axe AX1 de rotation, le bâti 300 est solidaire d'au moins un deuxième rail de guidage axial le long du premier axe AX1 de rotation, le premier rail de guidage axial étant coulissant par rapport au deuxième rail de guidage le long du premier axe AX1 de rotation.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Tête (1) de soudage par friction malaxage, destinée à être fixée sur une machine (M) pour réaliser un soudage par friction malaxage à l'aide d'un outil comportant un épaulement périphérique (100) et un pion central (200), qui est entouré par l'épaulement périphérique (100) autour d'un premier axe (AX) de rotation et qui est apte à faire saillie par rapport à l'épaulement périphérique (100),
la tête (1) comportant un bâti (300), destiné à être fixé à un châssis (C ) de la machine (M), la tête (1) comportant un arbre central rotatif (201) auquel est destiné à être fixé le pion central (200), une pièce (301) de fixation d'épaulement, qui est située autour de l'arbre central (201) et à laquelle est destiné à être fixé l'épaulement périphérique (100),
la tête (1) comporte en outre un arbre primaire rotatif (302) d'entraînement en rotation à la fois de la pièce (301) de fixation d'épaulement et de l'arbre central rotatif (201) autour du premier axe (AX1) de rotation,
l'arbre central rotatif (201) et la pièce (301) de fixation d'épaulement ayant un dispositif (400) d'accouplement l'un à l'autre, pour que l'arbre central rotatif (201) soit solidaire en rotation de la pièce (301) de fixation d'épaulement autour du premier axe (AX1) de rotation et pour que l'arbre central rotatif (201) soit libre en translation par rapport à la pièce (301) de fixation d'épaulement le long du premier axe (AX1) de rotation,
la tête (1) comportant un moteur (250) et un deuxième dispositif (210) d'entraînement en translation de l'arbre central rotatif (201) le long du premier axe (AX1) de rotation à partir du moteur (250) pendant la rotation de l'arbre central rotatif (201) et de la pièce (301) de fixation d'épaulement autour du premier axe (AX1) de rotation, entre au moins une position basse de l'arbre central rotatif (201), dans laquelle le pion central (200) fait saillie par rapport à l'épaulement périphérique (100) suivant le premier axe (AX1) de rotation et une position haute de l'arbre central rotatif (201), dans laquelle le pion central (200) ne fait pas saillie par rapport à l'épaulement périphérique (100) suivant le premier axe (AX1) de rotation,
**caractérisée en ce que** la tête (1) comporte une pièce (350) d'interface extérieure destinée à être fixée à une broche rotative (B) de la machine (M) et un premier dispositif (310) de transmission de rotation de la pièce (350) d'interface extérieure à l'arbre primaire rotatif (302) autour du premier axe (AX1) de rotation, la pièce (350) d'interface extérieure dépassant d'une surface supérieure (323) du bâti (300).

2. Tête suivant la revendication 1, **caractérisée en ce que** le premier axe (AX1) de rotation, l'arbre central rotatif (201) et l'arbre primaire rotatif (302) sont déportés et parallèle par rapport à un deuxième axe (AX2) de rotation de la pièce (350) d'interface extérieure.

3. Tête suivant l'une quelconque des revendications précédentes, **caractérisée en ce que** le premier dispositif (310) de transmission de rotation comporte un arbre secondaire (311) solidaire en rotation de la pièce (350) d'interface extérieure autour du deuxième axe (AX2) de rotation, une première poulie (312) fixée autour de l'arbre secondaire (311), une deuxième poulie (313) fixée autour de l'arbre primaire rotatif (302) et une courroie (314) de transmission de rotation entre la première poulie (312) et la deuxième poulie (313) pour transmettre la rotation de la pièce (350) d'interface extérieure autour du deuxième axe (AX2) de rotation à l'arbre primaire rotatif (302) autour du premier axe (AX1) de rotation.

4. Tête suivant l'une quelconque des revendications précédentes, **caractérisée en ce que** le moteur (250) comporte un arbre tertiaire (251) rotatif autour d'un troisième axe (AX3) de rotation,
le deuxième dispositif (210) d'entraînement en translation comporte un arbre intermédiaire (221) coaxial et déporté par rapport à l'arbre central (201), un mécanisme (220) de transmission de rotation de l'arbre tertiaire (251) rotatif autour du troisième axe (AX3) de rotation à l'arbre intermédiaire (221) autour du premier axe (AX1) de rotation et un mécanisme (230) de transformation de rotation de l'arbre intermédiaire (221) autour du premier axe (AX1) de rotation en translation de l'arbre central (201) le long du premier axe (AX1) de rotation.

5. Tête suivant la revendication 4, **caractérisée en ce que** l'arbre tertiaire (251) du moteur (250) est rotatif autour du troisième axe (AX3) de rotation déporté et transverse par rapport au premier axe (AX1) de rotation,
le mécanisme (220) de transmission de rotation comporte un mécanisme (225) de renvoi d'angle de l'arbre tertiaire (251) rotatif autour du troisième axe (AX3) de rotation à l'arbre intermédiaire (221) autour du premier axe (AX1) de rotation.

6. Tête suivant la revendication 5, **caractérisée en ce que** le mécanisme (225) de renvoi d'angle de l'arbre tertiaire (251) rotatif comporte au moins une première vis sans fin (222) solidaire en rotation de l'arbre tertiaire (251) et au moins une deuxième roue dentée (223) solidaire en rotation autour de l'arbre intermédiaire (221), la deuxième vis sans fin (223) engrenant avec la première roue dentée (222).

7. Tête suivant l'une quelconque des revendications 4 à 6, **caractérisée en ce que** le mécanisme (230) de transformation de rotation comporte un premier organe fileté (231), qui est fixé à ou formé par l'arbre intermédiaire (221), un deuxième organe taraudé (232), qui est solidaire en translation de l'arbre central (201) le long du premier axe (AX1) de rotation, et un élément (233) de blocage de rotation du deuxième organe taraudé (232),
le premier organe fileté (232) coopérant par une liaison de vissage avec le deuxième organe taraudé (232) autour du premier axe (AX1) de rotation,
l'élément (233) de blocage étant fixé à une platine intérieure (226), sur laquelle l'arbre intermédiaire (221) est monté rotatif, la platine intérieure (226) étant montée dans le bâti (300).

8. Tête suivant la revendication 7, **caractérisée en ce que** le premier organe fileté (231) est une vis (231) fixée à ou formée par l'arbre intermédiaire (221), le deuxième organe taraudé (232) est un écrou (232) vissé autour de la vis (231).

9. Tête suivant l'une quelconque des revendications 4 à 6, **caractérisée en ce que** le mécanisme (230) de transformation de rotation comporte un premier organe taraudé (231), qui est fixé à ou formé par l'arbre intermédiaire (221), un deuxième organe fileté (232), qui est solidaire en translation de l'arbre central (201) le long du premier axe (AX1) de rotation, et un élément (233) de blocage de rotation du premier organe taraudé (231),
le premier organe taraudé (231) coopérant par une liaison de vissage avec le deuxième organe fileté (232) autour du premier axe (AX1) de rotation,
l'élément (233) de blocage étant fixé à une platine intérieure (226), sur laquelle l'arbre intermédiaire (221) est monté rotatif, la platine intérieure (226) étant montée dans le bâti (300),
le premier organe taraudé (231) est un écrou fixé à l'arbre intermédiaire (221), le deuxième organe fileté (232) est une vis, l'écrou étant vissé autour de la vis.

10. Tête suivant l'une quelconque des revendications 7 à 9, **caractérisée en ce que** le mécanisme (230) de transformation de rotation comporte un manchon (234), qui comporte un premier côté (2341) fixé autour du deuxième organe (232) et un deuxième côté (2342) dans lequel est fixé un palier (235) de support de rotation de l'arbre central (201) autour du premier axe (AX1) de rotation.

11. Tête suivant la revendication 10, **caractérisée en ce que** le palier (235) de support de rotation est un montage de roulement (235), comportant au moins une première partie (2351) de roulement fixée dans le deuxième côté (2342) du manchon (234) et au moins une deuxième partie (2352) de roulement, qui est fixée à l'arbre central (201) et qui est rotative par rapport à la première partie (2351) de roulement.

12. Tête suivant la revendication 10 ou 11, **caractérisée en ce que** le manchon (234) est inséré dans une cavité intérieure (303) de l'arbre primaire rotatif (302) et est mobile en translation le long du premier axe (AX1) de rotation dans la cavité intérieure (303).

13. Tête suivant l'une quelconque des revendications précédentes, **caractérisée en ce que** le dispositif (400) d'accouplement comporte une première partie (401) d'accouplement fixée à l'arbre central rotatif (201) et une deuxième partie (402) d'accouplement fixée dans la pièce (301) de fixation d'épaulement, la première partie (401) d'accouplement coopérant par une liaison de glissement avec la deuxième partie (402) d'accouplement le long du premier axe (AX1) de rotation et de solidarité en rotation avec la deuxième partie (402) d'accouplement.

14. Tête suivant la revendication 13, **caractérisée en ce que** la première partie (401) d'accouplement est saillante sur l'arbre central rotatif (201) transversalement au premier axe (AX1) de rotation, la deuxième partie (402) d'accouplement est une rainure (402), qui s'étend sur une surface intérieure (403) de la pièce (301) de fixation d'épaulement le long du premier axe (AX1) de rotation et dans laquelle la première partie (401) d'accouplement peut être déplacée en translation le long du premier axe (AX1) de rotation en étant bloquée en rotation autour du premier axe (AX1) de rotation.

15. Tête suivant l'une quelconque des revendications précédentes, **caractérisée en ce que** dans la position haute, le pion central (200) est rentré au-dessus d'une surface inférieure (101) de l'épaulement périphérique (100).

16. Tête suivant l'une quelconque des revendications précédentes, **caractérisée en ce que** la pièce (301) de fixation d'épaulement et l'épaulement périphérique (100) sont d'une seule pièce.

17. Procédé de soudure par friction malaxage de pièces (P1, P2) **caractérisé par** les étapes suivantes :
on monte le bâti (300) de la tête (1) de soudage suivant l'une quelconque des revendications précédentes sur une machine (M), la pièce (350) d'interface extérieure de la tête (1) dépassant d'une surface supérieure (323) du bâti (300) de la tête (1) de soudage et étant fixée à une broche rotative (B) de la machine (M), on commande (E1) par un dispositif de contrôle du moteur (250) la sortie du pion central (200) hors de l'épaulement périphérique (100) jusqu'à une position basse,
on commande (E2) par un dispositif de contrôle de la machine (M) la rotation de la broche (B) de la machine (M) pour provoquer la rotation de l'épaulement périphérique (100) et du pion central (200) autour du premier axe (AX1) de rotation,
on abaisse (E3) par le dispositif de contrôle de la machine (M) la tête (1) vers les pièces (P1, P2), pour abaisser l'épaulement périphérique (100) et le pion central (200) faisant saillie hors de l'épaulement périphérique (100), qui tournent tous les deux autour du premier axe (AX1) de rotation, contre les pièces (P1, P2),
on commande (E4) par le dispositif de contrôle du moteur (250) la translation du pion central (200) par rapport à l'épaulement périphérique (100) pour qu'une extrémité inférieure (202) du pion central (200) soit rapprochée ou éloignée par rapport à l'épaulement périphérique (100), pendant que d'une part l'épaulement périphérique (100), qui se trouve en appui contre les pièces (P1, P2), et d'autre part le pion central (200) tournent tous les deux autour du premier axe (AX1) de rotation,
on éloigne (E5) la tête (1) par rapport aux pièces (P1, P2).

## Patentansprüche

1. Kopf (1) für Rührreibschweißen, der zur Befestigung an einer Maschine (M) zur Durchführung eines Rührreibschweißens mit Hilfe eines Werkzeugs bestimmt ist, das einen umlaufenden Mantel (100) und einen zentralen Stift (200) aufweist, der von dem umlaufenden Mantel (100) um eine erste Rotationsachse (AX) umgeben ist und der imstande ist, im Verhältnis zu dem umlaufenden Mantel (100) hervorzustehen,
wobei der Kopf (1) einen Rahmen (300) aufweist, der zur Befestigung an einem Gestell (C) der Maschine (M) bestimmt ist,
wobei der Kopf (1) eine zentrale rotierende Welle (201) aufweist, an der der zentrale Stift (200) bestimmt ist, befestigt zu sein, ein Mantelbefestigungsteil (301), das sich um die zentrale Welle (201) befindet und an dem der umlaufende Mantel (100) bestimmt ist, befestigt zu sein,
wobei der Kopf (1) ferner eine primäre rotierende Welle (302) aufweist, die gleichzeitig das Mantelbefestigungsteil (301) und die zentrale rotierende Welle (201) um die erste Rotationsachse (AX1) rotierend antreibt,
wobei die rotierende Welle (201) und das Mantelbefestigungsteil (301) eine Vorrichtung (400) zur Kopplung aneinander haben, damit die zentrale rotierende Welle (201) mit dem Mantelbefestigungsteil (301) um die erste Rotationsachse (AX1) rotatorisch fest verbunden ist und damit die zentrale rotierende Welle (201) im Verhältnis zum Mantelbefestigungsteil (301) entlang der ersten Rotationsachse (AX1) translatorisch frei ist,
wobei der Kopf (1) einen Motor (250) und eine zweite Vorrichtung (210) zum Translationsantrieb der zentralen rotierenden Welle (201) entlang der ersten Rotationsachse (AX1) durch den Motor (250) während der Rotation der zentralen rotierenden Welle (201) und des Mantelbefestigungsteils (301) um die erste Rotationsachse (AX1) zwischen mindestens einer niedrigen Position der zentralen rotierenden Welle (201), in welcher der zentrale Stift (200) im Verhältnis zum umlaufenden Mantel (100) gemäß der ersten Rotationsachse (AX1) hervorsteht, und einer hohen Position der zentralen rotierenden Welle (201), in welcher der zentrale Stift (200) im Verhältnis zum umlaufenden Mantel (100) gemäß der ersten Rotationsachse (AX1) nicht hervorsteht, aufweist,
**dadurch gekennzeichnet, dass** der Kopf (1) ein äußeres Schnittstellenteil (350), das zur Befestigung an einer rotierenden Spindel (B) der Maschine (M) bestimmt ist und eine erste Vorrichtung (310) zur Übertragung der Rotation des äußeren Schnittstellenteils (350) an die primäre rotierende Welle (302) um die erste Rotationsachse (AX1) aufweist, wobei das äußere Schnittstellenteil (350) eine äußere Oberfläche (323) des Rahmens (300) überragt.

2. Kopf nach Anspruch 1, **dadurch gekennzeichnet, dass** die erste Rotationsachse (AX1), die zentrale rotierende Welle (201) und die primäre rotierende Welle (302) versetzt und parallel im Verhältnis zu einer zweiten Rotationsachse (AX2) des äußeren Schnittstellenteils (350) sind.

3. Kopf nach einem beliebigen der vorangehenden Ansprüche, **dadurch gekennzeichnet, dass** die erste Vorrichtung (310) zur Übertragung der Rotation eine sekundäre Welle (311), die mit dem äußeren Schnittstellenteil (350) um die zweite Rotationsachse (AX2) rotatorisch fest verbunden ist, eine erste Scheibe (312), die um die sekundäre Welle (311) befestigt ist, eine zweite Scheibe (313), die um die primäre rotierende Welle (302) befestigt ist und einen Riemen (314) zur Übertragung der Rotation zwischen der ersten Scheibe (312) und der zweiten Scheibe (313) aufweist, um die Rotation des äußeren Schnittstellenteils (350) um die zweite Rotationsachse (AX2) auf die primäre rotierende Welle (302) um die erste Rotationsachse (AX1) zu übertragen.

4. Kopf nach einem beliebigen der vorangehenden Ansprüche, **dadurch gekennzeichnet, dass** der Motor (250) eine tertiäre rotierende Welle (251) um eine dritte Rotationsachse (AX3) aufweist,
wobei die zweite Vorrichtung (210) zum Translationsantrieb eine Übergangswelle (221), die im Verhältnis zur zentralen Welle (201) koaxial und versetzt ist, einen Mechanismus (220) zur Übertragung der Rotation der tertiären rotierenden Welle (251) um die dritte Rotationsachse (AX3) auf die Übergangswelle (221) um die erste Rotationsachse (AX1) und einen Mechanismus (230) zur Umwandlung der Rotation der Übergangswelle (221) um die erste Rotationsachse (AX1) in Translation der zentralen Welle (201) entlang der ersten Rotationsachse (AX1) aufweist.

5. Kopf nach Anspruch 4, **dadurch gekennzeichnet, dass** die tertiäre Welle (251) des Motors (250) um die versetzte und im Verhältnis zur ersten Rotationsachse (AX1) querliegende dritte Rotationsachse (AX3) rotierend ist,
wobei der Mechanismus (220) zur Übertragung der Rotation einen Winkeltriebmechanismus (225) der um die dritte Rotationsachse (AX3) rotierenden tertiären Welle (251) auf die Übergangswelle (221) um die erste Rotationsachse (AX1) aufweist.

6. Kopf nach Anspruch 5, **dadurch gekennzeichnet, dass** der Winkeltriebmechanismus (225) der rotierenden tertiären Welle (251) mindestens eine erste Schnecke (222) aufweist, die mit der tertiären Welle (251) rotatorisch fest verbunden ist, und mindestens ein zweites Zahnrad (223), das um die Übergangswelle (221) rotatorisch fest verbunden ist, wobei die zweite Schnecke (223) in das erste Zahnrad (222) eingreift.

7. Kopf nach einem beliebigen der Ansprüche 4 bis 6, **dadurch gekennzeichnet, dass** der Mechanismus (230) zur Umwandlung der Rotation ein erstes Außengewindeorgan (231) aufweist, das an der Übergangswelle (221) befestigt ist oder von ihr gebildet wird, ein zweites Innengewindeorgan (232), das mit der zentralen Welle (201) entlang der ersten Rotationsachse (AX1) translatorisch fest verbunden ist, und ein Rotationsblockierelement (233) des zweiten Innengewindeorgans (232),
wobei das erste Außengewindeorgan (232) mittels einer Schraubverbindung mit dem zweiten Innengewindeorgan (232) um die erste Rotationsachse (AX1) zusammenwirkt,
wobei das Blockierelement (233) an einer inneren Platte (226) befestigt ist, auf der die Übergangswelle (221) rotatorisch angebracht ist, wobei die innere Platte (226) im Rahmen (300) angebracht ist.

8. Kopf nach Anspruch 7, **dadurch gekennzeichnet, dass** das erste Außengewindeorgan (231) eine Schraube (231) ist, die an der Übergangswelle (221) befestigt oder von ihr gebildet ist, wobei das zweite Innengewindeorgan (232) eine Mutter (232) ist, die um die Schraube (231) geschraubt ist.

9. Kopf nach einem beliebigen der Ansprüche 4 bis 6, **dadurch gekennzeichnet, dass** der Mechanismus (230) zur Umwandlung der Rotation ein ersten Innengewindeorgan (231) aufweist, das an der Übergangswelle (221) befestigt oder von ihr gebildet wird, ein zweites Außengewindeorgan (232), das mit der zentralen Welle (201) entlang der ersten Rotationsachse (AX1) translatorisch fest verbunden ist, und ein Rotationsblockierelement (233) des ersten Innengewindeorgans (231),
wobei das erste Innengewindeorgan (231) mittels einer Schraubverbindung mit dem zweiten Außengewindeorgan (232) um die erste Rotationsachse (AX1) zusammenwirkt,
wobei das Blockierelement (233) an einer inneren Platte (226) befestigt ist, auf der die Übergangswelle (221) rotatorisch angebracht ist, wobei die innere Platte (226) im Rahmen (300) angebracht ist,
wobei das erste Innengewindeorgan (231) eine Mutter ist, die an der Übergangswelle (221) befestigt ist, wobei das zweite Außengewindeorgan (232) eine Schraube ist, wobei die Mutter um die Schraube geschraubt ist.

10. Kopf nach einem beliebigen der Ansprüche 7 bis 9, **dadurch gekennzeichnet, dass** der Mechanismus (230) zur Umwandlung der Rotation eine Hülse (234) aufweist, die eine erste Seite (2341) aufweist, die um das zweite Organ (232) befestigt ist, und eine zweite Seite (2342), in der ein Rotationsstützlager (235) der zentralen Welle (201) um die erste Rotationsachse (AX1) befestigt ist.

11. Kopf nach Anspruch 10, **dadurch gekennzeichnet, dass** das Rotationsstützlager (235) eine Lagermontage (235) ist, die mindestens einen ersten Lagerteil (2351) aufweist, der in der zweiten Seite (2342) der Hülse (234) befestigt ist, und mindestens einen zweiten Lagerteil (2352), der an der zentralen Welle (201) befestigt ist und der im Verhältnis zum ersten Lagerteil (2351) rotatorisch ist.

12. Kopf nach Anspruch 10 oder 11, **dadurch gekennzeichnet, dass** die Hülse (234) in einen inneren Hohlraum (303) der primären rotierende Wellen (302) eingesetzt und translatorisch entlang der ersten Rotationsachse (AX1) im inneren Hohlraum (303) beweglich ist.

13. Kopf nach einem beliebigen der vorangehenden Ansprüche, **dadurch gekennzeichnet, dass** die Kopplungsvorrichtung (400) einen ersten Kopplungsteil (401) aufweist, der an der zentralen rotierenden Welle (201) befestigt ist, und einen zweiten Kopplungsteil (402), der im Mantelbefestigungsteil (301) befestigt ist, wobei der erste Kopplungsteil (401) mittels einer Gleitverbindung mit dem zweiten Kopplungsteil (402) entlang der ersten Rotationsachse (AX1) und rotatorisch mit dem zweiten Kopplungsteil (402) fest verbunden zusammenwirkt.

14. Kopf nach Anspruch 13, **dadurch gekennzeichnet, dass** der erste Kopplungsteil (401) auf der zentralen rotierenden Welle (201) quer zur ersten Rotationsachse (AX1) hervorsteht, der zweite Kopplungsteil (402) eine Nut (402) ist, die sich auf einer inneren Oberfläche (403) des Mantelbefestigungsteils (301) entlang der ersten Rotationsachse (AX1) erstreckt und in welcher der erste Kopplungsteil (401) translatorisch entlang der ersten Rotationsachse (AX1) bewegbar ist, indem er um die erste Rotationsachse (AX1) rotatorisch blockiert ist.

15. Kopf nach einem beliebigen der vorangehenden Ansprüche, **dadurch gekennzeichnet, dass** der zentrale Stift (200) in der hohen Position oberhalb einer unteren Oberfläche (101) des umlaufenden Mantels (100) eingezogen ist.

16. Kopf nach einem beliebigen der vorangehenden Ansprüche, **dadurch gekennzeichnet, dass** das Mantelbefestigungsteil (301) und der umlaufende Mantel (100) aus einem einzigen Teil sind.

17. Rührreibschweißverfahren von Teilen (P1, P2), **gekennzeichnet durch** die folgenden Schritte:
Anbringen des Rahmens (300) des Schweißkopfs (1) nach einem beliebigen der vorangehenden Ansprüche auf einer Maschine (M),
wobei das äußere Schnittstellenteil (350) des Kopfs (1) eine obere Oberfläche (323) des Rahmens (300) des Schweißkopfs (1) überragt und an einer rotierenden Spindel (B) der Maschine (M) befestigt ist,
Steuern (E1), durch eine Steuervorrichtung des Motors (250), des Heraustretens des zentralen Stifts (200) aus dem umlaufenden Mantel (100) bis in eine niedrige Position,
Steuern (E2), durch eine Steuervorrichtung der Maschine (M), der Rotation der Spindel (B) der Maschine (M), um die Rotation des umlaufenden Mantels (100) und des zentralen Stifts (200) um die erste Rotationsachse (AX1) zu bewirken,
Absenken (E3), durch die Steuervorrichtung der Maschine (M), des Kopfs (1) zu den Teilen (P1, P2), um den umlaufenden Mantel (100) und den zentralen Stift (200), der aus dem umlaufenden Mantel (100) hervorsteht, die beide um die erste Rotationsachse (AX1) drehen, auf die Teile (P1, P2) abzusenken,
Steuern (E4) der Translation des zentralen Stifts (200) im Verhältnis zum umlaufenden Mantel (100) durch die Steuervorrichtung des Motors (250), damit ein unteres Ende (202) des zentralen Stifts (200) im Verhältnis zum umlaufenden Mantel (100) angenähert oder entfernt wird, währenddessen einerseits der umlaufende Mantel (100), der sich auf den Teilen (P1, P2) abgestützt, und zum anderen der zentrale Stift (200) beide um die erste Rotationsachse (AX1) drehen,
Beabstanden (E5) des Kopfs (1) im Verhältnis zu den Teilen (P1, P2).

## Claims

1. A friction stir welding head (1), intended to be secured to a machine (M) for carrying out friction stir welding using a tool comprising a peripheral shoulder (100) and a central pin (200), which is surrounded by the peripheral shoulder (100) about a first axis of rotation (AX1) and which is able to protrude from the peripheral shoulder (100),
the head (1) comprising a frame (300), intended to be secured to a chassis (C) of the machine (M),
the head (1) comprising a central rotary shaft (201) to which the central pin (200) is intended to be secured, a shoulder securing part (301), which is located about the central shaft (201) and to which the peripheral shoulder (100) is intended to be secured,
the head (1) further comprising a primary rotary shaft (302) for driving in rotation both the shoulder securing part (301) and the central rotary shaft (201) about the first axis of rotation (AX1),
the central rotary shaft (201) and the shoulder securing part (301) having a coupling device (400) for coupling them to each other, so that the central rotary shaft (201) is integral in rotation with the shoulder securing part (301) about the first axis of rotation (AX1) and so that the central rotary shaft (201) is free in translation with respect to the shoulder securing part (301) along the first axis of rotation (AX1),
the head (1) comprising a motor (250) and a second translational drive device (210) for driving in translation the central rotary shaft (201) along the first axis of rotation (AX1) from the motor (250) during the rotation of the central rotary shaft (201) and of the shoulder securing part (301) about the first axis of rotation (AX1), between at least a low position of the central rotary shaft (201), in which the central pin (200) protrudes from the peripheral shoulder (100) along the first axis of rotation (AX1) and a high position of the central rotary shaft (201), in which the central pin (200) does not protrude from the peripheral shoulder (100) along the first axis of rotation (AX1),
**characterized in that** the head (1) comprises an external interface part (350) intended to be secured to a rotary spindle (B) of the machine (M) and a first rotation transmission device (310) for transmitting the rotation of the external interface part (350) to the primary rotary shaft (302) about the first axis of rotation (AX1), the external interface part (350) projecting from an upper surface (323) of the frame (300).

2. The head according to claim 1, wherein the first axis of rotation (AX1), the central rotary shaft (201) and the primary rotary shaft (302) are offset and parallel with respect to a second axis of rotation (AX2) of the external interface part (350).

3. The head according to any one of the preceding claims, wherein the first rotation transmission device (310) comprises a secondary shaft (311) integral in rotation with the external interface part (350) about the second axis of rotation (AX2), a first pulley (312) secured about the secondary shaft (311), a second pulley (313) secured about the primary rotary shaft (302) and a rotation transmission belt (314) between the first pulley (312) and the second pulley (313) to transmit the rotation of the external interface part (350) about the second axis of rotation (AX2) to the primary rotary shaft (302) about the first axis of rotation (AX1).

4. The head according to any one of the preceding claims, wherein the motor (250) comprises a tertiary rotary shaft (251) about a third axis of rotation (AX3),
the second translational drive device (210) comprises an intermediate shaft (221) which is coaxial and offset with respect to the central rotary shaft (201), a rotation transmission mechanism (220) for transmitting the rotation of the tertiary rotary shaft (251) about the third axis of rotation (AX3) to the intermediate shaft (221) about the first axis of rotation (AX1) and a rotation transformation mechanism (230) for transforming the rotation of the intermediate shaft (221) about the first axis of rotation (AX1) in translation of the central rotary shaft (201) along the first axis of rotation (AX1).

5. The head according to claim 4, wherein the tertiary shaft (251) of the motor (250) is rotatable about the third axis of rotation (AX3) offset and transverse with respect to the first axis of rotation (AX1),
the rotation transmission mechanism (220) comprises an angle transmission mechanism (225) of the tertiary rotary shaft (251) about the third axis of rotation (AX3) to the intermediate shaft (221) about the first axis of rotation (AX1).

6. The head according to claim 5, wherein the angle transmission mechanism (225) of the tertiary rotary shaft (251) comprises at least a first worm screw (222) integral in rotation with the tertiary shaft (251) and at least a second toothed wheel (223) integral in rotation about the intermediate shaft (221), the second toothed wheel (223) meshing with the first worm screw (222).

7. The head according to any one of claims 4 to 6, wherein the rotation transformation mechanism (230) comprises a first threaded member (231), which is secured to or formed by the intermediate shaft (221), a second tapped member (232), which is integral in translation with the central shaft (201) along the first axis of rotation (AX1), and a rotation blocking element (233) for blocking rotation of the second tapped member (232), the first threaded member (232) cooperating by a screw connection with the second tapped member (232) about the first axis of rotation (AX1),
the rotation blocking element (233) being secured to an internal plate (226), about which the intermediate shaft (221) is rotatably mounted, the internal plate (226) being mounted in the frame (300).

8. The head according to claim 7, wherein the first threaded member (231) is a screw (231) secured to or formed by the intermediate shaft (221), the second tapped member (232) is a nut (232) screwed about the screw (231).

9. The head according to any one of claims 4 to 6, wherein the rotation transformation mechanism (230) comprises a first tapped member (231), which is secured to or formed by the intermediate shaft (221), a second threaded member (232), which is integral in translation with the central shaft (201) along the first axis of rotation (AX1), and a rotation blocking element (233) for blocking rotation of the first tapped member (231), the first tapped member (231) cooperating by a screw connection with the second threaded member (232) about the first axis of rotation (AX1),
the blocking element (233) being secured to an internal plate (226), about which the intermediate shaft (221) is rotatably mounted, the internal plate (226) being mounted in the frame (300),
the first tapped member (231) is a nut secured to the intermediate shaft (221), the second threaded member (232) is a screw, the nut being screwed about the screw.

10. The head according to any one of claims 7 to 9, wherein the rotation transformation mechanism (230) comprises a sleeve (234), which comprises a first side (2341) secured about the second member (232) and a second side (2342) in which a rotation support bearing (235) of the central shaft (201) about the first axis of rotation (AX1) is secured.

11. The head according to claim 10, wherein the rotation support bearing (235) is a bearing assembly (235), comprising at least a first bearing portion (2351) secured in the second side (2342) of the sleeve (234) and at least a second bearing portion (2352) secured to the central shaft (201) and rotatable with respect to the first bearing portion (2351).

12. The head according to claim 10 or 11, wherein the sleeve (234) is inserted into an internal cavity (303) of the primary rotary shaft (302) and is movable in translation along the first axis of rotation (AX1) in the internal cavity (303).

13. The head according to any one of the preceding claims, wherein the coupling device (400) comprises a first coupling portion (401) secured to the central rotary shaft (201) and a second coupling portion (402) secured in the shoulder securing part (301), the first coupling portion (401) cooperating by a sliding connection with the second coupling portion (402) along the first axis of rotation (AX1) and being integral in rotation with the second coupling portion (402).

14. The head according to claim 13, wherein the first coupling portion (401) is protruding on the central rotary shaft (201) transversely to the first axis of rotation (AX1), the second coupling portion (402) is a groove (402), which extends over an internal surface (403) of the shoulder securing part (301) along the first axis of rotation (AX1) and in which the first coupling portion (401) is movable in translation along the first axis of rotation (AX1) while being blocked in rotation about the first axis of rotation (AX1).

15. The head according to any one of the preceding claims, wherein in the high position the central pin (200) is retracted above a lower surface (101) of the peripheral shoulder (100).

16. The head according to any one of the preceding claims, wherein the shoulder securing part (301) and the peripheral shoulder (100) are in one piece.

17. A method for friction-stir welding pieces (P1, P2), **characterized by** the following steps:
mounting the frame (300) of the welding head (1) according to any one of the preceding claims on a machine (M),
the external interface part (350) of the head (1) projecting from an upper surface (323) of the frame (300) of the welding head (1) and being secured to a rotary spindle (B) of the machine (M),
commanding (E1) by a motor control device for controlling the motor (250) the central pin (200) to move out of the peripheral shoulder (100) up to the low position,
commanding (E2) by a machine control device for controlling the machine (M) the rotary spindle (B) of the machine (M) to rotate to cause the peripheral shoulder (100) and the central pin (200) to rotate about the first axis of rotation (AX1),
lowering (E3) by the machine control device the welding head (1) towards the pieces (P1, P2), in order to lower the peripheral shoulder (100) and the central pin (200) protruding out of the peripheral shoulder (100), which both rotate about the first axis of rotation (AX1),
against the pieces (P1, P2),
commanding (E4) by the motor control device the central pin (200) to translate with respect to the peripheral shoulder (100) so that a lower end (202) of the central pin (200) is moved closer or away with respect to the peripheral shoulder (100), while on the one hand the peripheral shoulder (100), which is in contact against the pieces (P1, P2), and on the other hand the central pin (200), both rotate about the first axis of rotation (AX1),
moving the welding head (1) away (E5) with respect to the pieces (P1, P2).
